# EUROPEAN PATENT SPECIFICATION

(11) **EP 2 701 396 B1**
(45) Date of publication and mention of the grant of the patent: **04.09.2019**
(21) Application number: 11864123.2
(22) Date of filing: 20.04.2011
(51) Int. Cl.: H04N 21/438, H04N 21/238, H04N 21/2362, H04N 21/222, H04N 21/434, H04N 21/472, H04N 21/482

(54) **SYSTEM AND METHOD FOR PLAYING DIGITAL TELEVISION PROGRAM, AND DIGITAL TELEVISION RECEPTION TERMINAL**
SYSTEM UND VERFAHREN ZUR WIEDERGABE EINES DIGITALEN FERNSEHPROGRAMMS UND EMPFANGSENDGERÄT FÜR DIGITALES FERNSEHEN
SYSTÈME ET PROCÉDÉ POUR DIFFUSER UN PROGRAMME DE TÉLÉVISION NUMÉRIQUE, ET TERMINAL DE RÉCEPTION DE TÉLÉVISION NUMÉRIQUE

(43) Date of publication of application: 26.02.2014
(73) Proprietor: Shenzhen Skyworth Digital Technology Co., Ltd., Guangdong 518000 (CN); Shenzhen Skyworth Software Co., Ltd, Shenzhen, Guangdong 518057 (CN)
(72) Inventor: ZHANG, Shenli, Guangdong 518000 (CN); ZHOU, Qi, Guangdong 518000 (CN); WANG, Xiaohui, Guangdong 518000 (CN); SHI, Chi, Guangdong 518000 (CN)
(74) Representative: Mewburn Ellis LLP
(86) International application number: PCT/CN2011/073081
(87) International publication number: WO 2012/142758

(56) References cited:
- WO-A1-99/57904
- CN-A- 101 309 395
- CN-A- 101 662 661
- US-A- 6 005 631
- US-A1- 2005 073 579
- US-A1- 2006 031 875
- US-A1- 2008 263 596
- US-A1- 2009 274 448
- US-A1- 2009 286 469
- US-A1- 2010 186 035
- US-A1- 2010 197 220

## Description

### FIELD OF THE INVENTION

The present disclosure relates to digital television technical field, and particularly to a system and a method for playing a digital television program, and a digital television receiving terminal.

### BACKGROUND OF THE INVENTION

In prior art, US 2009/274448A1 discloses a recording apparatus. The recording apparatus includes: a guide information obtaining section to obtain guide information of a program scheduled to be delivered; a series information obtaining section to obtain series information for specifying a plurality of programs belonging to a series; a program data obtaining section to obtain data of the programs; a program data storage section capable of storing the data of the programs; a program data recording section to store the data of the programs obtained by the program data obtaining section in the program data storage section; a recording history storage section to store information about the programs whose data is stored in the program data storage section, as recording history information; and a detection section to detect a recording status of at least one program belonging to the series intended to be recorded based on the guide information, the series information, and the recording history information. US 2010/0186035 discloses a method of processing a non-real time service of a broadcast receiver. US2008/263596 discloses managing a personal schedule and broadcasting programs. US2005/073579 refers to a MPEG table data structure.

With the development of the three-network convergence, the bi-directional set-top box has become a trend. Also, video on demand (VOD) services based on the bi-directional network reconstruction is becoming more and more popular. Accordingly, different kinds of browsers and implementation methods for video on demand have been developed.

In the existing art, it is necessary to integrate a browser in a bi-directional set-top box to implement VOD services. Moreover, different methods for VOD implementation need different browers integrated.

In a conventional method for VOD implementation, when acquiring an on-demand program list, a set-top box needs transmitting a request of acquiring the on-demand program list to a front-end server. The front-end server issues the on-demand program list after successful authentication. However, the huge amount of concurrent requests may cause network congestion. Moreover, the network delay may severely slow the speed of obtaining the program on-demand list, and thus, the user experience would be greatly influenced.

In the existing art, the on-demand program list issued by the server is displayed on the set-top box side via a browser. However, the number of offered on-demand promgrams is limited, and there is no search function for the on-demand programs.

Moreover, conventional technology still has the following shortcomings to overcome.
(1) The speed of obtaining the on-demand program list is slow, and the network congestion may be caused, which greatly influencing user experience.
(2) The on-demand program list is issued passively.
(3) There are no attractive audio/video clips, which are relevant to the on-demand programs, coming with the issued on-demand program list. Thus, it is not easy to attract users to watch the on-demand programs.
(4) The integration of a browser brings complexity to the integration of software. Furthermore, it is difficult for different browsers to be compatible with different VOD, which brings risk to the integration.
(5) The number of offered on-demand programs is limited, and there is no search function.

As discussed above, how to transmit on-demand program lists to set-top boxes initiatively, how to improve the speed of obtaining on-demand program lists, and how to improve user experience is one of research directions in the the digital television technology field.

### SUMMARY OF THE INVENTION

According to one aspect of the invention, there is provided a system for playing a digital television program as set out in claim 1. The system comprises a server and at least one digital television receiving terminal.

The server presets a VOD protocol specification and transmits, according to the VOD protocol specification, a VOD service list and additional information of the VOD service list to the digital television receiving terminal in a broadcasting mode. The server transmits the VOD service list and addition information of the VOD service list initiatively, i.e. without requiring the digital television receiving terminal to transmit a request for the VOD service list and additional information of the VOD service list.

The digital television receiving terminal presets the VOD protocol specification and stores, according to the VOD protocol specification, the VOD service list and the additional information of the VOD service list transmitted by the VOD server into an on-demand program database.

The digital television receiving terminal further matches relative programs in the on-demand program database according to a matching identifier input by a user, displays the programs to the user, receives a program on-demand request of the user, and obtains a television program from the server according to the program on-demand request to play the television program to the user.

According to a preferred embodiment of the present invention, the digital television receiving terminal matching the relative programs in the on-demand program database according to the matching identifier input by the user and displaying the programs to the user comprises: displaying the VOD service list and the additional information of the VOD service list to the user, the user chooses a program according to the VOD service list and the additional information of the VOD service list; and directly receiving the matching identifier input by the user to match the relative programs in the on-demand program database.

In the VOD protocol specification, a data structure in a data stream transmitted between the server and the digital television receiving terminal comprises a linkage descriptor, a VOD service list section, a VOD service information section, a price reference descriptor, a picture data section, and audio/video segment insertion information.

According to a preferred embodiment of the present invention, the digital television receiving terminal obtaining the VOD service list and additional information of the VOD service list from the data stream comprises:
parsing and receiving the VOD service list section, and obtaining the VOD service list and address information of the server;
parsing and receiving the VOD service information section, and obtaining related information of a VOD service;
parsing and receiving the price reference descriptor, and obtaining information related to a service pay mode and a service price;
parsing and receiving the picture data section, and obtaining corresponding picture data; and
parsing and receiving the audio/video segment insertion information, and storing an audio/video segment service associated with the audio/video segment insertion information in the VOD service information section.

According to a preferred embodiment of the present invention, the digital television receiving terminal is further used for obtaining a VOD service list version number from the data stream, comparing the obtained VOD service list version number with a VOD service list version number stored in the on-demand program database, and updating the VOD service list if the two VOD service list version numbers are inconsistent.

In another aspect of the invention, there is provided a method for playing a digital television program as set out in claim 5. The method comprises:
providing a server and at least one digital television receiving terminal;
the server presetting a video on demand (VOD) protocol specification, and transmitting, according to the VOD protocol specification, a VOD service list and additional information of the VOD service list to the digital television receiving terminal in a broadcasting mode, wherein the server transmits the VOD service list and addition information of the VOD service list initiatively, i.e. without requiring the digital television receiving terminal to transmit a request for the VOD service list and additional information of the VOD service list;
the digital television receiving terminal presetting the VOD protocol specification, and storing, according to the VOD protocol specification, the VOD service list and the additional information of the VOD service list transmitted by the VOD server to an on-demand program database;
the digital television receiving terminal matching relative programs in the on-demand program database according to a matching identifier input by a user, and displaying the programs to the user; and
the digital television receiving terminal receiving a program on-demand request of the user, and obtaining a television program from the server according to the program on-demand request to play the television program to the user.

According to a preferred embodiment of the present invention, the digital television receiving terminal matching the relative programs in the on-demand program database according to the matching identifier input by the user and displaying the programs to the user comprises:
displaying the VOD service list and the additional information of the VOD service list to the user, wherein the user chooses a program according to the VOD service list and the additional information of the VOD service list; and
receiving directly the matching identifier input by the user to match the relative programs in the on-demand program database.

In the VOD protocol specification, a data structure in a data stream transmitted between the server and the digital television receiving terminal comprises a linkage descriptor, a VOD service list section, a VOD service information section, a price reference descriptor, a picture data section, and audio/video segment insertion information.

According to a preferred embodiment of the present invention, the digital television receiving terminal obtaining the VOD service list and the additional information of the VOD service list from the data stream comprises:
parsing and receiving the VOD service list section, and obtaining the VOD service list and address information of the server;
parsing and receiving the VOD service information section, and obtaining related information of a VOD service;
parsing and receiving the price reference descriptor, and obtaining information related to a service pay mode and a service price;
parsing and receiving the picture data section, and obtaining corresponding picture data; and
parsing and receiving the audio/video segment insertion information, and storing an audio/video segment service associated with the audio/video segment insertion information in the VOD service information section.

According to a preferred embodiment of the present invention, the method further comprises:
the digital television receiving terminal obtaining a VOD service list version number from the data stream, comparing the obtained VOD service list version number with a VOD service list version number stored in the on-demand program database, and updating the VOD service list if the two VOD service list version numbers are inconsistent.

Also disclosed herein is an unclaimed digital television receiving terminal. The digital television receiving terminal comprises:
a storing module for presetting video on demand (VOD) protocol specification and store, according to the VOD protocol specification, a VOD service list and additional information of the VOD service list transmitted by a VOD server into an on-demand program database, wherein the VOD server transmits the VOD service list and addition information of the VOD service list initiatively, i.e. without requiring the digital television receiving terminal to transmit a request for the VOD service list and additional information of the VOD service list;
a displaying module for matching relative programs in the on-demand program database according to a matching identifier input by a user and displaying the programs to the user; and
a playing module for receiving a program on-demand request of the user and obtaining a television program from the server according to the program on-demand request to play the television program to the user.

The digital television receiving terminal further comprises:
a matching module for receiving the matching identifier input by the user to match the relative programs in the on-demand program database.

In the VOD protocol specification, a data structure in a data stream transmitted between the server and the digital television receiving terminal comprises a linkage descriptor, a VOD service list section, a VOD service information section, a price reference descriptor, a picture data section, and audio/video segment insertion information.

The digital television receiving terminal further comprises:
an obtaining module for parsing and receiving the VOD service list section, obtaining the VOD service list with address information of the server; parsing and receiving the VOD service information section, obtaining related information of a VOD service; parsing and receiving the price reference descriptor, obtaining information related a service pay mode and a service price; parsing and receiving the picture data section, obtaining corresponding picture data; parsing and receiving the audio/video segment insertion information, and storing an audio/video segment service associated with the audio/video segment insertion information in the VOD service information section.

The digital television receiving terminal further comprises:
a comparing module obtaining a VOD service list version number from the data stream, comparing the VOD service list version number with a VOD service list version number stored in the on-demand program database, and controlling the obtaining module to update the VOD service list if the two VOD service list version numbers are inconsistent.

Based on the embodiments described above, in the present invention, the on-demand program list can be initiatively distributed to a set-top box, the speed of obtaining the on-demand program list can be increased, and user experience can be improved, which is beneficial to the popularizing of set-top boxes and other digital television receiving terminals.

### BRIEF DESCRIPTION OF THE DRAWINGS

Fig. 1 is a structure diagram of a digital television program playing system provided in an embodiment of the present invention;
Fig. 2 is a table provided in an embodiment of the present invention showing the corresponding relationships between table_id in the VOD protocol specification and its identified section;
Fig. 3 is a table provided in an embodiment of the present invention showing the corresponding relationships between section_type and stream_type in a linkage descriptor as well as data types identified by the two fields in the VOD protocol specification;
Fig. 4 is a table provided in an embodiment of the present invention showing corresponding relationships between various values of vod_service_type and VOD services types in a VOD service list section in the VOD protocol specification;
Fig. 5 is a table provided in an embodiment of the present invention showing the corresponding relationships between values of vod_service_info_type and types in a VOD service information section in the VOD protocol specification;
Fig. 6 is a table provided in an embodiment of the present invention showing the corresponding relationships between values of picture_format and picture formats in a VOD service information section in the VOD protocol specification;
Fig. 7 is a table provided in an embodiment of the present invention showing the corresponding relationships between values of pay_mode and pay modes in a price reference descriptor in the VOD protocol specification;
Fig. 8 is a structure diagram provided in an embodiment of the present invention showing logical relationships and organization forms of data structures in the VOD protocol specification;
Fig. 9 is an embodiment structure diagram of a set-top box provided in an embodiment of the present invention;
Fig. 10(a) is a flowchart of a set-top box parsing a VOD service list and its additional information provided in an embodiment of the present invention;
Fig. 10(b) is a flowchart of a set-top box parsing a VOD service list and its additional information provided in another embodiment of the present invention;
Fig. 11 is a flowchart of a set-top box updating a VOD service list and its additional information provided in an embodiment of the present invention;
Fig. 12 is a flowchart of video on demand provided in an embodiment of the present invention;
Fig. 13 is a diagram of an on-demand interface provided in an embodiment of the present invention;
Fig. 14 is a diagram of an on-demand program searching interface provided in an embodiment of the present invention;
Fig. 15 is a flowchart of a playing method for digital television program provided in an embodiment of the present invention;
Fig. 16 is a structure diagram of a digital television receiving terminal provided in an embodiment of the present invention.

### DETAILED DESCRIPTION

Detailed description for the disclosure will be provided below in conjuction with the drawings and the embodiments.

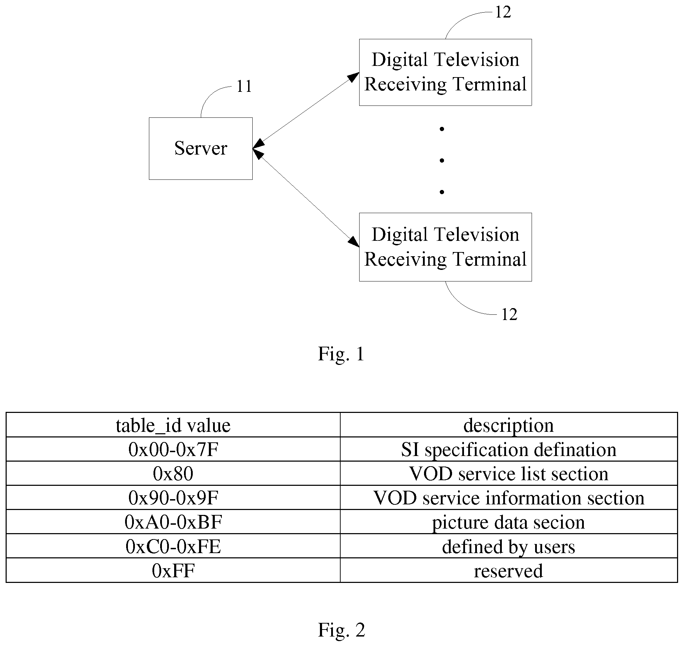

Fig. 1 shows a structure diagram of a digital television program playing system provided in an embodiment of the present invention. The system includes a server 11 and at least one digital television receiving terminal 12.

Wherein, the server 11 presets a VOD protocol specification and transmits, according to the VOD protocol specification, a VOD service list and additional information of the VOD service list to the digital television receiving terminal 12 in a broadcasting mode.

The digital television receiving terminal 12 presets the VOD protocol specification and stores, according to the VOD protocol specification, the VOD service list and the additional information of the VOD service list transmitted by the VOD server 11 into an on-demand program database.

The digital television receiving terminal 12 further matches relative programs in the on-demand program database according to a matching identifier input by a user, displays the programs to the user, receives a program on-demand request of the user, and obtains a television program from the server 11 according to the program on-demand request to play the television program to the user.

Wherein, the digital television receiving terminal matching the relative programs in the on-demand program database according to the matching identifier input by the user and displaying the programs to the user comprises displaying the VOD service list and the additional information of the VOD service list to the user, the user chooses a program according to the VOD service list and the additional information of the VOD service list; and directly receiving the matching identifier input by the user to match the relative programs in the on-demand program database.

Wherein, in the VOD protocol specification, a data structure in a data stream transmitted between the server and the digital television receiving terminal comprises a linkage descriptor, a VOD service list section, a VOD service information section, a price reference descriptor, a picture data section, and audio/video segment insertion information. For detailed descriptions, one may refer to the contents below, which will not be illustrated here to avoid redundancy.

In the implementation, the digital television receiving terminal obtaining the VOD service list and additional information of the VOD service list from the data stream comprises: parsing and receiving the VOD service list section, and obtaining the VOD service list and address information of the server; parsing and receiving the VOD service information section, and obtaining related information of a VOD service; parsing and receiving the price reference descriptor, and obtaining information related to a service pay mode and a service price; parsing and receiving the picture data section, and obtaining corresponding picture data; and parsing and receiving the audio/video segment insertion information, and storing an audio/video segment service associated with the audio/video segment insertion information in the VOD service information section. For detailed descriptions, one may refer to the contents below, which will not be illustrated here to avoid redundancy.

In the implementation, the digital television receiving terminal is further used for obtaining a VOD service list version number from the data stream, comparing the obtained VOD service list version number with a VOD service list version number stored in the on-demand program database, and updating the VOD service list if the two VOD service list version numbers are inconsistent.

In order to standardize data structures, logical relationships, and organization forms of a VOD service list issued in a transport stream (TS) and its additional information, it is provided data structures of a VOD protocol specification in an embodiment of the present invention, the data structures including: a linkage descriptor (linkage_descriptor()) having a linkage type of 0xFE, a VOD service list section (vod_service_list_section()), a VOD service information section (vod_service_info_section()), a price reference descriptor (price_reference_descriptor()), a picture data section (picture_data_section()), and audio/video segment insertion information (av_segment_insert_info()). One embodiment of the present invention will be illustrated by the case that the digital TV reception terminal is a set-top box as an example.

The linkage descriptor having the linkage type of 0xFE links to a service in VOD service list. The linkage descriptor includes a transport stream identifier (transport_stream_id), an original network identifier (original_network_id), and a service identifier (service_id), which can identify a unique service in a network, the service being a service in VOD service list. The linkage descriptor links to the service in VOD service list by the transport stream identifier (transport_stream_id), the original network identifier (original_network_id), and the service identifier (service_id).

The linkage descriptor is also used to provide overall information of the VOD service list, including: a VOD service list version number (vod_list_version_number), a force flag (force_flag), a VOD service list section table identifier (vod_service_list_section_table_id), a section type 1 (section_type_1), a VOD service information section start table identifier (vod_service_info_section_start_table_id), a VOD service information section end table identifier (vod_service_info_section_end_table_id), a section type 2 (section_type_2), a picture data section start table identifier (picture_data_section_start_table_id), a picture data section end table identifier (picture_data_section_end_table_id), a section type 3 (section_type_3), a VOD service list number (vod_service_list_number), a VOD service list identifier (vod_service_list_id), and a sub-version number (sub_version_number).

The VOD service list section (vod_service_list_section()) is used to provide information of a VOD service list that may be offered by different VOD servers. The VOD service list section includes the following key fields: a VOD service list identifier (vod_service_list_id), a sub-version number (sub_version_number), a last VOD service list identifier (last_vod_service_list_id), a VOD server IP address (vod_server_ip), a backup VOD server IP address (backup_vod_server_ip), a VOD service number (vod_service_number), a VOD service identifier (vod_service_id), a VOD service type (vod_service_type), a VOD service priority (vod_service_priority), and a VOD service name byte (vod_service_name_byte).

The VOD service information section is used to provide information related to a VOD service. The VOD service information section contains the following key information: a VOD service list identifier (vod_service_list_id), a VOD service identifier (vod_service_id), a descriptor (descriptor()), a VOD service information type (vod_service_info_type). The VOD service information type further includes four different types, which are text description, picture description, performer list, and audio/video segment, and these four different types have different data structures and key fields. The text description contains the following key fields: a segment flag (segment_flag), a duration of the service or segament (duration), text characters providing the text description (text_char), a segment number (segment_number), and a segment identifier (segment_id). The picture decription contains the following key fields: a picture data section table identifier (picture_data_section_table_id), a picture identifier (picture_id), picture format (picture_format), picture size (picture_size), and a block number (block_number). These fields give the picture's overall control information related to the VOD service. The performer list contains the following key fields: a performer number (performer_number), a performer name byte (performer_name_byte), and a performer information byte (performer_info_byte). The audio/video segment contains the following key fields: a transport stream identifier (transport_stream_id), an original network identifier (original_network_id), and a service identifier (service_id), which used to identify a unique audio/video segment service.

The price reference descriptor (price_reference_descriptor()) provides information related to price reference of the VOD service. The price reference descriptor includes the following key information: pay mode (pay_mode). Different values of pay_mode correspond to different pay modes and different key fields. The pay mode includes impulse pay per view (IPPV), impulse pay per time (IPPT), and pay per click (PPC), wherein the impulse pay per view (IPPV) tells a price point per view of a key word (price_point_per_view), the impulse pay per time (IPPT) provides a price point per minute of a key word (price_point_per_minute), and the pay per click (PPC) provides a price point per channel of a key word (price_point_per_channel).

The picture data section (picture_data_section()) provides picture data related to the VOD service. The picture data section includes the following key information: a table identifier (table_id), a picture identifier (picture_id), a last picture identifier (last_picture_id), and actual data bytes of picture (data_byte).

The audio/video segment insertion information (av_segment_insert_info()) provides information uniquely associated with the audio/video segment service and the VOD service or a VOD service segment. The audio/video segment insertion information includes the following key fields: a VOD service list identifier (vod_service_list_id), a VOD service identifier (vod_service_id), and a segment identifier (segment_id). The audio/video segment service is uniquely associated with and the VOD service or the VOD service segment by the above three identity fields.

A general description of the data structures for VOD protocol specification is given in the above description. In the following, the syntax and semantic meaning of each data structure will be described in detail with the following order: the linkage descriptor (linkage_descriptor(), the VOD service list section (vod_service_list_section()), the VOD business information section (vod_service_info_section()), the price reference descriptor (price_reference_descriptor()), the picture data section (picture_data_section()), and the audio/video segment insertion information (av_segment_insert_info()).

A. The first one of VOD protocol specification data structures: the linkage descriptor (linkage_descriptor()), the format of which is:

```
 linkage_descriptor() // a linkage descriptor
 {
 descriptor_tag //8-bit, a descriptor tag
 descriptor_length //8-bit, a descriptor length
 transport_stream_id //16-bit, a transport stream identifier
 original_network_id //16-bit, an original network identifier
 service_id //16-bit, a service identifier
 linkage_type //8-bit, a linkage type
 if (linkage_type= =0xFE) //link to a service in a VOD service list
 {
 vod_list_version_number // 5-bit, a VOD service list version number
 reserved //2-bit, reserved
 force_flag // 1-bit, a force flag
 vod_service_list_section_table_id //8-bit, a VOD service list section table
 identifier
 section_type_1 //8-bit, section type 1
 vod_service_info_section_start_table_id //8-bit, a starting table identifier of VOD
 service information section
 vod_service_info_section_end_table_id //8-bit, an ending table identifier of
 VOD service information section
 section_type_2 //8-bit, section type 2
 picture_data_section_start_table_id //8-bit, a starting table identifier of
 picture data
 picture_data_section_end_table_id //8-bit, an ending table identifier of
 picture data
 section_type_3 //8-bit, section type 3
 vod_service_list_number //24-bit, the number of VOD service
 lists
 for (i0=0;i0<N0;i0++)
 {
 vod_service_list_id //24-bit, an identifier of VOD service list
 reserved //3-bit, reserved
 sub_version_number // 5-bit, a sub-version number
 }
 }
 }
```

The semantic meaning of each field in the defined linkage descriptor (linkage_descriptor()) are illustrated as follows.

Descriptor_tag: a tag of the descriptor, an 8-bit field. It is used to identify different descriptors. In this case, it is 0x4A, indicating that the descriptor is a linkage descriptor.

Descriptor_length: the length of the descriptor, an 8-bit field. It tells the total length of the descriptor and denotes the byte numbers of data which are after this field in the descriptor.

Transport_stream_id: an identifier of the transport stream, a 16-bit field. It is used to identify a unique transport stream in a transmission system.

Original_network_id: an identifier of the original network, a 16-bit field. It is used to provide the network identifier of the original transmission system.

Service_id: a service identifier, a 16-bit field. It is used to identify different services in the transport stream and corresponds to program_number in program_map_section.

Linkage_type: a linkage type, an 8-bit field. It is used to define the linkage type, for example, a link with a service in VOD service list. In the Service Information (SI) specification, a linkage type of 0x80-0xFE is defined and used by users. Here, the linkage type is defined as 0xFE, indicating a link with a service in VOD service list. The service in VOD service list is uniquely denoted by transport_stream_id, original_network_id, and service_id in the linkage descriptor.

Vod_list_version_number: a VOD service list version number, a 5-bit field. It is used to provide a general version number of the VOD service list section and corresponds to a field of version number (version_number) in the VOD service list section (vod_service_list_section()), which is the second one of the VOD protocol specification data structures. When the information of the VOD service list section changes, vod_service_list_section() is increased by 1. When increased to 31, the value of vod_service_list_section() is reset to 0.

Reserved: a reserved field. It is used for future extension function, usually being coded as 1.

Force_flag: a force flag, a 1-bit field. It is used to indicate whether a forced update is implemented when the VOD service list version number changes. As the value of force_flag being 1, it indicates to launch the update immediately for the VOD service list and additional information of the VOD service list when monitoring the VOD service list version number changed. As the value of the force_flag being 0, it indicates not to launch the update immediately for a VOD service list and additional information of the VOD service list when monitoring the VOD service list version number changed. Instead, the update will be launched when the digital television receiving terminal is restarted or the user enters the on-demand interface.

Vod_service_list_section_table_id: a table identifier of VOD service list section, an 8-bit field. It is used to identify a table having a VOD service list section. In the SI specification, a table_id of 0x80-0xFE is defined and used by users. Here, the table_id is defined as 0x80. The corresponding relationships between the table_id and its identified section are shown in the table of Fig. 2.

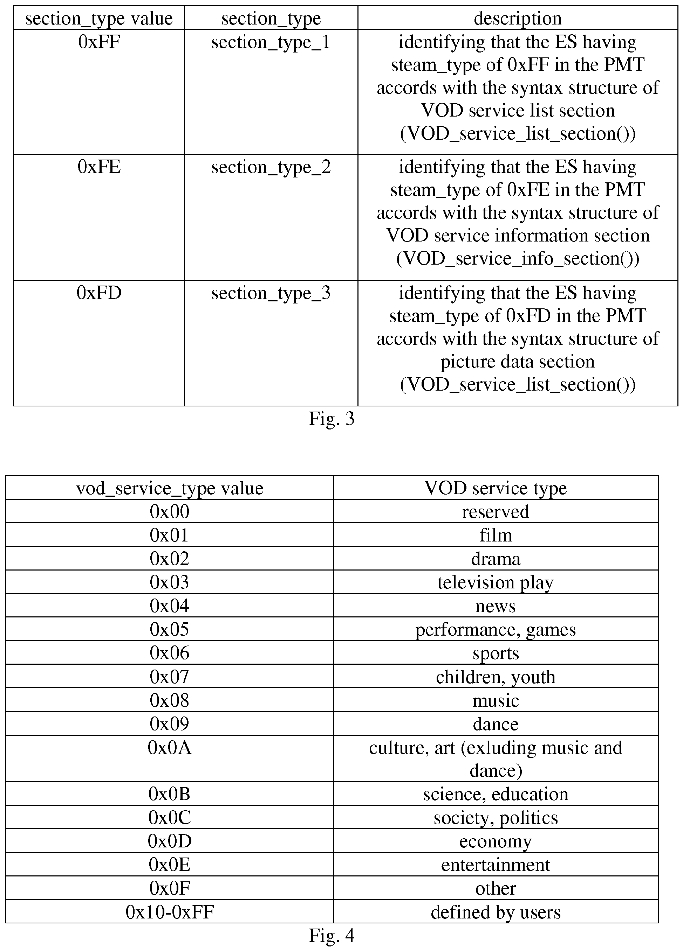

Section_type_1: section type 1, an 8-bit field. It is used to provide a data type of the VOD service list section and corresponds to a stream type field (stream_type) of an elementary stream (ES) which is described in a program map table (PMT) of a service in VOD service list linking with the linkage descriptor. Here, the section_type_1 is defined as 0xFF. Correspondingly, the stream type field (stream_type) of the ES for describing the VOD service list segment in the PMT of the service in VOD service list linking with the linkage descriptor is also defined as 0xFF, indicating that the data structure of the ES accords with the syntax of the VOD service list section (vod_service_list_section()), which is the second one of VOD protocol specification data structures. The corresponding relationships between the section_type and the stream_type with the identified data types of these two fields are shown in the table of Fig. 3.

Vod_sevice_info_section_start_table_id: a starting table identifier of VOD service information section, an 8-bit field. It is used to provide a starting identifier of tables when a VOD service information section has several tables. As shown in the table of Fig.2, here, the identifier can be defined in the range of 0x90-0x9F. It corresponds to a table idendifier field (table_id) in the VOD service information section (vod_service_info_section()), which is the third one of VOD protocol specification data structures, and it is used to provide a starting table identifier of a VOD service information section.

Vod_service_info_section_end_table_id: an ending table identifier of VOD service information section, an 8-bit field. It is used to provide an ending identifier of tables when a VOD service information section has several tables. As the table shown in Fig. 2, here, the value of the identifier can be defined in the range of 0x90-0x9F. The identifier corresponds to a table identifier field (table_id) in the VOD service information section (vod_service_info_section()), which is the third one of VOD protocol specification data structures, and it is used to provide an ending table identifier of VOD service information section.

Section_type_2: section type 2, an 8-bit field. It is used to provide a data type of the VOD service information section. As shown in the table of Fig. 3, here, it is defined as 0xFE. Correspondingly, the stream_type field of ES used to describe the VOD service information section in a PMT of a service in VOD service list linking with the linkage descriptor is 0xFE, indicating that the data structure of the ES accords with the syntax of VOD service information section (vod_service_info_section()), which is the third one of VOD protocol specification data structures.

Picture_data_section_start_table_id: a starting table identifier of picture data section, an 8-bit field. It is used to provide a starting identifier of tables when the picture data section has several tables. As shown in the table of Fig. 2, here, the identifier can be defined in the range of 0xA0-0xBF. It corresponds to a table identifier field (table_id) in the picture data section (picture_data_section()), which is the fifth one of VOD protocol specification data structures. It is used to provide a starting table identifier of the picture data section.

Picture_data_section_end_table_id: an ending table identifier of picture data section, an 8-bit field. It is used to provide an ending identifier of tables when the picture data section has several tables. As shown in the table of Fig.2, here, the identifier can be defined in the range of 0xA0-0xBF. It corresponds to a table identifier field (table_id) in picture data section (picture_data_section()), which is the fifth one of VOD protocol specification data structures. It is used to provide an ending table identifier of the picture data section.

Section_type_3: section type 3, an 8-bit field. It is used to provide a data type of a picture data section. As shown in the table of Fig.3, here, it is 0xFD. Correspondingly, the stream-type of ES used to describe the picture data section in a PMT of a service in VOD service list linking with the linkage descriptor is 0xFD, indicating that the data structure of the ES accords with the syntax of picture data section (picture_data_section()), which is the fifth one of VOD protocol specification data structures.

Vod_service_list_number: the number of VOD service lists, a 14-bit field. It is used to provide the number of VOD service lists and corresponds to the last VOD service list identifier field (last_vod_service_list_id) in the VOD service list section field (vod_service_list_section()), which is the second one of VOD protocol specification data structures.

Vod_service_list_id: a VOD service list identifier, a 24-bit field. It is used to identify different VOD service lists within one service of VOD service list. It corresponds to the VOD service list identifier field (vod_service_list_id) in the VOD service list section (vod_service_list_section()), which is the second one of VOD protocol specification data structures.

Sub_version_number: a sub-version number, a 5-bit field. It is used to provide a version number of the VOD service list identified by the VOD service list identifier field (vod_service_list_id). And, it corresponds to the sub-version number field (sub_version_number) in the VOD service list section (vod_service_list_section()), which is the second one of VOD protocol specification data structures.

Note: When there are enough VOD service lists, several linkage descriptors (linkage_descriptor()) may be added in the net information table (NIT) or the Bouquet Association Table (BAT) to link to different services in the VOD service lists.

B. The second one of VOD protocol specification data structures: the VOD service list section (vod_service_list_section()), the format of which is:

```
vod_service_list_section() // a VOD service list section
 {
 table_id //8-bit, a table identifier
 section_syntax_indicator //1-bit, a section syntax indicator
 reserved_future_use //1-bit, reserved for future use
 reserved //2-bit, reserved
 section_length //12-bit, the length of the section
 reserved //2-bit, reserved
 version_number // 5-bit, a version number
 current_next_indicator //1-bit, a current next indicator
 vod_service_list_id //24-bit, a VOD service list identifier
 reserved //3-bit, reserved
 sub_version_number //5-bit, sub-version number
 last_vod_service_list_id //24-bit, the last VOD service list identifier
 section_number //8-bit, a section number
 last_section_number //8-bit, a last section number
 vod_server_ip //32-bit, a VOD server IP address
 backup_vod_server_ip //32-bit, a backup VOD server IP address
 vod_service_number //16-bit, the number of VOD services
 for (i1=0;i1<N1;i1++)
 {
 vod_service_id // 16-bit, a VOD service identifier
 vod_service_type //8-bit, a VOD service type
 vod_service_priority //8-bit, a VOD service priority
 ISO 639-2_language_code //24-bit, an ISO 639-2 language code
 vod_service_name_length //8-bit, the length of VOD service name
 for (i2=0;i2<N2;i2++)
 {
 vod_service_name_byte //8-bit, a VOD service name byte
 }
 }
 CRC32 //32-bit, a CRC32 checksum
 }
```

The semantic meaning of each field in the defined VOD service list section (vod_service_list_section()) are illustrated as follows.

Table_id: an identifier of a table, an 8-bit field. It is used to identify a table having the VOD service list section. In this case, it is 0x80, indicating that the section having table_id of 0x80 belongs to the VOD service list section. It corresponds to VOD service list section table identifier field) (vod_service_list_section_table_id) in the linkage descriptor (linkage_descriptor()), which is the first one of VOD protocol specification data structures. The table in Fig. 2 can be referred to for details.

Section_syntax_indicator: a section syntax indicator, a 1-bit field. It should be set to 1.

Reserved_future_use: a field reserved for future use. It is reserved for future extension.

Reserved: a reserved field. It is used for future function extension, usually coded as 1.

Section_length: the length of the section, a 12-bit field. It indicates the byte length of the current section starting from the next byte after this field.

Version_number: a version number, a 5-bit field. It is used to identify an overall VOD service list section version number and corresponds to a VOD service list version number field (vod_list_version_number) in the linkage descriptor (linkage_descriptor()), which is the first one of VOD protocol specification data structures. When the information in the VOD service list section changed, the value of version_number is increased by 1. When increased to 31, the value is reset to 0.

Current_next_indicator: a current next indicator, a 1-bit field. As set to 1, the field indicates that the current sub-list is being used. As set to 0, the field indicates that the sub-list transmitted has not been used and is the next sub-list to be used.

Vod_service_list_id: a VOD service list identifier, a 24-bit field. In a service of the VOD service list, this identifier and the table identifier (table_id = 0x80) together identifies a unique VOD service list. From the beginning of 0x000001, every increase of a VOD service list makes the value of vod_service_list_id increased by 1. The VOD service list identifier field (vod_service_list_id) corresponds to the VOD service list identifier field (vod_service_list_id) in the linkage descriptor (linkage_descriptor()), which is the first one of VOD protocol specification data structures.

Sub_version_number: a sub-version number, a 5-bit field. It is used to provide a version number of the VOD service list uniquely identified by vod_service_list_id. It corresponds to the sub-version number field (sub_version_number) in the linkage descriptor (linkage_descriptor()), which is the first one of VOD protocol specification data structures. When the information of the VOD service list uniquely identified by vod_service_list_id changed, the value of sub_version_number is increased by 1. When increased to 31, it is reset to 0.

Last_vod_service_list_id: an identifier of the last VOD service list, a 24-bit field. It is used to identify the last VOD service list in the table identified by the table_id of 0x80. It corresponds to the number of VOD service lists field (vod_service_list_number) in the linkage descriptor (linkage_descriptor()), which is the first one of VOD protocol specification data structures.

Section_number: a section number, an 8-bit field. It is used to provide a section number of the sub-list identified by vod_service_list_id. The section_number of the first section in the sub-list is defined as 0x00. Every increase of a section having an identical table_id and vod_service_list_id makes the section_number increased by 1.

Last_section_number: the last section number, an 8-bit field. It indicates the section number of the last section, i.e. the section having the largest section number, in the sub-list identified by vod_service_list_id.

Vod_server_ip: the VOD server IP address, a 32-bit field. It is used to describe the IP address of the VOD server. For example, if the VOD server IP address is 192.168.16.100, it could be coded as 0xC0A81064 in this field.

Backup_vod_server_ip: the backup VOD server IP address, a 32-bit field. It is used to describe the IP address of the VOD backup server. For example, if the backup VOD server IP address is 192.168.16.101, it could be coded as "0xC0A81065" in this field.

Note: the service contents in the VOD server and the ones in the backup VOD server are exactly the same. Moreover, each VOD server corresponds to one VOD service list, namely, each VOD server corresponds one by one to a VOD service list uniquely identified by vod_service_list_id in the VOD service list section (vod_service_list_section()) of a certain service in a VOD service list.

Vod_service_number: the number of VOD services, a 16bit field. It is used to give the number of services in the VOD service list uniquely identified by vod_service_list_id of a service in VOD service list.

Vod_service_id: a VOD service identifier, a 16-bit field. It is used to identify a unique VOD service in the VOD service list uniquely identified by vod_service_list_id of a service in the VOD service list.

Vod_service_type: VOD service type, an 8-bit field. The respective values of the field are used to identify respective VOD service types. The corresponding relationships between various values of vod_service_type and VOD services types are shown in the table of Fig. 4.

Vod_service_priority: the VOD service priority, an 8-bit field. It is used to give a priority to the VOD service uniquely identified by vod_service_list_id and vod_service_id.

ISO 639-2_language_code: ISO 639-2 language code, a 24-bit field. It is used to specify the language applied for the VOD service name byte field (vod_service_name_byte). The field of ISO 639-2_language_code includes a 3-character code defined by ISO 639-2. The 3-character code can also be used by ISO 639-2/B and ISO 639-2/T. Each character, according to GB/T 15273.1-1994, is coded to 8 bits and inserted to the 24-bit field in sequence.

For example, the 3-character code "fre" of French can be coded as "0110 0110 0111 0010 0110 0101."

Vod_service_name_length: the length of a VOD service name, an 8-bit field. The field, which is in byte, is used to provide the length of the subsequent VOD service name byte field.

Vod_service_name_byte: a VOD service name byte, an 8-bit field. It is used to give a name to a VOD service.

CRC32 : the CRC32 checksum, a 32-bit field. The field includes the CRC value of the VOD service list section.

C. The third one of VOD protocol specification data structures: the VOD service information section (vod_service_info_section()), the format of which is:

```
vod_service_info_section() // a VOD service information section
 {
 table_id //8-bit, a table identifier
 section_syntax_indicator //1-bit, a section syntax indicator
 reserved_future_use //1-bit, reserved for future use
 reserved //2-bit, reserved
 section_length //12-bit, the length of section
 reserved //2-bit, reserved
 version_number //5-bit, a version number
 current_next_indicator //1-bit, a current next indicator
 sub_table_id //24-bit, a sub-table identifier
 reserved //3-bit, reserved
 sub_version_number //5-bit, a sub-version number
 last_sub_table_id //24-bit, the last sub-table identifier
 vod_service_list_id //24-bit, a VOD service list identifier
 section_number //8-bit, a section number
 last_section_number //8-bit, the last section number
 for (i3=0; i3<N3; i3++)
 {
 vod_service_id //16-bit, a VOD service identifier
 reserved //4-bit, reserved
 vod_service_descriptor_length //12-bit, the length of VOD service descriptor
 for (i4=0; i4<N4; i4++)
 {
 Descriptor() //a descriptor
 }
 reserved //4-bit, reserved
 vod_service_info_type //4-bit, a VOD service information type
 if (vod_service_info_type = ='0001') // text description
 {
 segment_flag //1-bit, a segment flag
 reserved //7-bit, reserved
 if (segment_flag = = '0') //not involved with segmentation
 {
 duration //24-bit, a duration
 ISO 639-2_language_code //24-bit, an ISO 639-2 language code
 vod_service_info_length //8-bit, the length of VOD service information
 for (i5=0; i5<N5; i5++)
 {
 text_char //8-bit, text characters
 }
 }
 if (segment_flag = = '1') //discribing each segment respectively
 {
 segment_number //16-bit, the number of segments
 for (i6=0; i6<N6; i6++)
 {
 segment-id //16-bit, a segment idendifier
 duration //24-bit, a duration
 ISO 639-2_language_code //24-bit, ISO 639-2 language code
 segment_info_length //8-bit, the length of segment information
 for (i7=0; i7<N7; i7++)
 {
 text_char //8-bit, text characters
 }
 }
 }
 }
 if (vod_service_info_type = ='0010') //picture description
 {
 picture_data_section_table_id //8-bit, a table identifier of picture data section
 picture_id //24-bit, a picture identifier
 picture_format //8-bit, a picture format
 picture_size //32-bit, a picture size
 block_number //8-bit, the numbr of blocks
 }
 if (vod_service_info_type = ='0011') //a performer list
 {
 performer_number //8-bit, the number of performers
 for (i8=0; i8<N8; i8++)
 {
 ISO 639-2_language_code //24-bit, an ISO 639-2 language code
 performer_name_length //8-bit, the length of performer name
 for (i9=0; i9<N9; i9++)
 {
 performer_name_byte //8-bit, a performer name byte
 }
 performer_info_length //8-bit, the length of performer information
 for (i10=0; i10<N10; i10++)
 {
 performer_info_byte //8-bit, a performer information byte
 }
 }
 }
 if (vod_service_info_type = ='0100') // an audio/video segment
 {
 transport_stream_id //16-bit, a transport stream identifier
 original_network_id //16-bit, an original network identifier
 service_id //16-bit, a service identifier
 }
 }
 CRC32 //32-bit, a CRC32 checksum
 }
```

The semantic meaning of each field in the defined VOD service information section (vod_service_info_section()) are illustrated as follows.

Table_id: a table identifier, an 8-bit field. It is used to identify a table having the VOD service information section. The value of identifier of the first table is given by the VOD service information section start table identifier field (vod_service_info_section_start_table_id) in the linkage descriptor (linkage_descriptor()), which is the first one of VOD protocol specification data structures . The values of identifiers of subsequent tables are increased by 1 in turn. The last table identifier, whose value being the largest, is given by the VOD service information section end table identifier field (vod_service_info_section_start_table_id) in the linkage descriptor (linkage_descriptor()), which is the first one of the VOD protocol specification data structures. The specific value range of the table identifier field is shown in Fig. 2.

Section_syntax_indicator: a section syntax indicator, a 1-bit field. It should be set as 1.

Reserved_future_use: a reserved field for future use. It is reserved for future extension.

Reserved: a reserved field. It is used for future function extension, usually being coded as '1'.

Section_length: the length of the section, a 12-bit field. It indicates the byte length of the current section starting from the next byte after this field.

Version_number: a version number, a 5-bit field. It is used to provide a version number of a table having the VOD service information section identified by table_id. When information in the table having the VOD service information section is changed, the value of version_number is increased by 1. When increased to 31, the value is reset to 0.

Current_next_indicator: a current next indicator, a 1-bit field. As set to 1, it means the current sub-table is being used. As set to 0, it means the sub-table transmitted has not been used yet and is the next one to be used.

Sub_table_id: a sub-table identifier, a 24-bit field. This identifier and table_id together uniquely identify a sub-table of the VOD service information section within the network. From the beginning of 0x000001, every increase of a sub-table makes the value of sub_table_id increased by 1.

Sub_version_number: a sub-version number, a 5-bit field. It is used to give a version number to a sub-table of the VOD service information section uniquely identified by table_id and sub_table_id.

Last_sub_table_id: a last sub-table identifier, a 24-bit field. It is used to provide an identifier of the last sub-table in the table having the VOD service information section identified by table_id. The last_sub_table_id has the largest value in the sub-table identifiers.

Vod_service_list_id: a VOD service list identifier, a 24-bit field. It identifies a unique VOD service list within a service of VOD service list, and corresponds to the VOD service list identifier field (vod_service_list_id) in the VOD service list section (vod_service_list_section()), which is the second one of VOD protocol specification data structures.

Section_number: a section number, an 8-bit field. It is used to provide a section number to a sub-table uniquely identified by table_id and sub_table_id. The section_number of the first section in the sub-table is labeled as 0x00. Every increase of a section having identical table_id and sub_table_id makes the section_number increased by 1.

Last_section_number: the last section number, an 8-bit field. It indicates a section number of the last section, i.e. the section having the largest section number, in a sub-table which is uniquely identified by table_id and sub_table_id.

Vod_service_id: a VOD service identifier, a 16-bit field. It is used to identify a unique VOD service in the VOD service list uniquely identified by vod_service_list_id, and corresponds to the VOD service identifier field (vod_service_id) in the VOD service list section (vod_service_list_section()), which is the second one of VOD protocol specification data structures.

Vod_service_descriptor_length: the length of a VOD service descriptor, a 12-bit field. It indicates the total byte length of the descriptor starting from the next byte after this field.

Descriptor(): a descriptor. It is used to describe relevant information of a VOD service. Herein, the price reference descriptor (price_reference_descriptor()), which is the fourth one of VOD protocol specification data structures, is given for reference. A user can also insert another existing descriptor or insert another self-defined descriptor according to the application need.

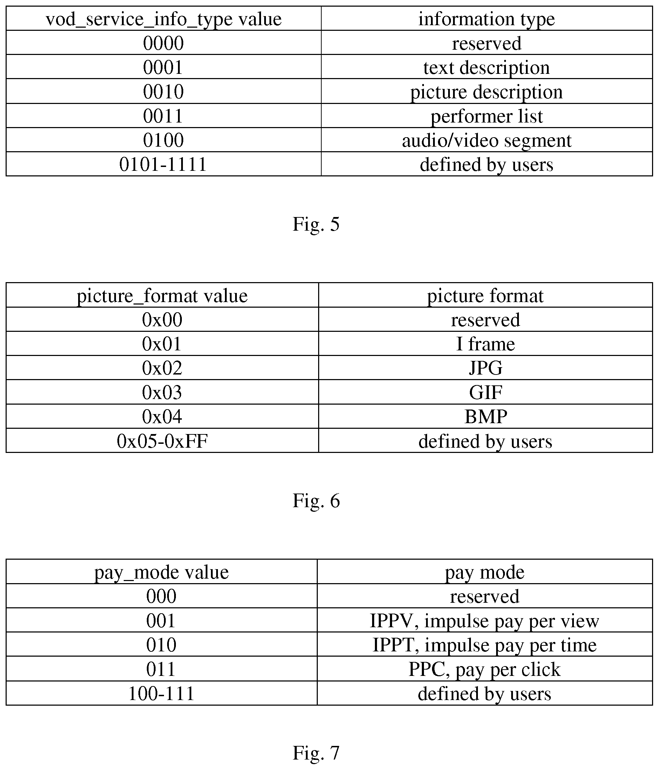

Vod_service_info_type: a VOD service information type, a 4-bit field. It is used to provide different types of VOD services. Specifically, the types include text description, picture description, performer list, and audio/video segments. The corresponding relationships between the values of vod_service_info_type and the types are shown in the table of Fig. 5 for reference.

Segment_flag: a segment flag, a 1-bit field. It is used to indicate whether the VOD service uniquely identified by vod_service_list_id and vod_service_id is segmented. The value of the field as 1 stands for segmentation and as 0 stands for no segmentation.

Duration: a duration, a 24-bit field. It is used to provide the duration of a VOD service uniquely identified by vod_service_list_id and vod_service_id when the VOD service has no segmentation, or provide the duration of a VOD service segment uniquely identified by vod_service_list_id, vod_service_id, and segment_id. The duration field is coded in term of six 4-bit BCD codes, which are labeled as hour, minute, and second respectively. For example, a duration of "12:45:30" is coded as "0x124530."

ISO 639-2_language_code: the ISO 639-2 language code, a 24-bit field. It is used to provide the language applying for a text description, a performer name, or a performer information description. For the specific semantic meaning of this field, one may refer to the semantic meaning of the ISO 639-2 language code field (ISO 639-2_language_code) in the VOD service list section (vod_service_list_section ()), which is the second one of VOD protocol specification data structures.

Vod_service_info_length: the length of VOD service information, an 8-bit field. The field gives, in bytes, the character length of the text description in the VOD service after this field, the VOD service being uniquely identified by vod_service_list_id and vod_service_id.

Text_char: a text character, an 8-bit field. It is used to provide a text description for a VOD service or a VOD service segment, usually being a brief introduction of a service or a service segment.

Segment_number: the number of segments, a 16-bit field. It is used to provide the number of the segments in a VOD service uniquely identified by vod_service_list_id and vod_service_id.

Segment_id: a segment identifier, a 16-bit field. It identifies a unique segment in a VOD service uniquely identified by vod_service_list_id and vod_service_id.

Segment_info_length: the length of segment information, an 8-bit field. The field gives, in byte, the character length of the text description after this field in the VOD service segment, the VOD service segment being uniquely identified by vod_service_list_id, vod_service_id, and segment_id.

Picture_data_section_table_id: a table identifier of picture data section, an 8-bit field. It is used to identify a picture data section related to a VOD service, and corresponds to the table identifier field (table_id) in the picture data section (picture_data_section()), which is the fifth one of the VOD protocol specification data structures. For specific value range of this field, one may refer to the table of Fig. 2.

Picture_id: a picture identifier, a 24-bit field. This field and the picture data section table identifier field (picture_data_section_table_id) together identifies a unique picture, and corresponds to the picture identifier field (picture_id) in the picture data section (picture_data_section()), which is the fifth one of VOD protocol specification data structures.

Picture_format: a picture format, an 8-bit field. It is used to provide a format of a picture. For the corresponding relationships between the values of the picture_format and picture formats, one may refer to the table of Fig. 5.

Picture_size: a picture size, a 32-bit field. It is used to provide the byte number of a picture data uniquely identified by picture_data_section_table_id and picture_id.

Block_number: the number of blocks, an 8-bit field. It is used to provide the number of the picture data segments encapsulated in the picture data section (picture_data_section()), which is the fifth one of the VOD protocol specification data structures, the picture data being uniquely identified by picture_data_section_table_id and picture_id. The block_number corresponds to the last section number field (last_section_number) in the picture data section (picture_data_section()), which is the fifth one of the VOD protocol specification data structures.

Performer_number: the number of performers, an 8-bit field. It is used to give the number of main performers.

Performer_name_length: the length of performer names, an 8-bit field. The field gives the length of performer name after this field in bytes.

Performer_name_byte: a performer name byte, an 8-bit field. It is used to give a performer name.

Performer_info_length: the length of performer information, an 8-bit field. The field gives the length of performer information after this field in bytes.

Performer_info_byte: a performer information byte, an 8-bit field. It is used to give performer information, usually being a brief introduction of a role played by a performer.

Transport_stream_id: a transport stream identifier, a 16-bit field. It is used to identify a unique transport stream in a transport system.

Original_network_id: an original network identifier, a 16-bit field. It is used to give a network identifier of an original transport system.

Service_id: a service identifier, a 16-bit field. It is used to identify different services in a transport stream and corresponds to the program_number filed in program_map_section.

Herein, the transport_stream_id, the original_network_id, and the service_id can identify a unique service, the service providing brief introduction information of the VOD service in the form of audio/video segment. The above three fields are a kind of service control information, and they serve similarly to a link descriptor as for linking to an audio/video segment service.

CRC32: the CRC32 checksum, a 32-bit field. The field includes the CRC value of the VOD service information section.

D. The fourth one of VOD protocol specification data structures: the price reference descriptor (price_reference_descriptor()), the format of which is:

```
 price_reference_descriptor() // a price reference descriptor
 {
 descriptor_tag //8-bit, a descriptor tag
 descriptor_length //8-bit, the length of descriptor
 reserved // 5-bit, reserved
 pay_mode //3-bit, a pay mode
 if(pay_mode= ='001') // IPPV, impulse pay per view
 {
 price_point_per_view //24-bit, price point per view
 }
 if(pay_mode= =' 010') // IPPT, impulse pay per time
 {
 price_point_per_minute //24-bit, price point per minute
 }
 if(pay_mode= =' 011') // PPC, pay per channel
 {
 price_point_per_ channel //24-bit, price point per channel
 }
 }
```

The semantic meaning of each field in the defined price reference descriptor (price_reference_descriptor()) are illustrated as follows:
descriptor_tag: a descriptor tag, an 8-bit field. It is used to identify different descriptors. In the SI specification, the range 0x80-0xFE is denoted as private descriptor tags defined by the user. Here, it is defined as 0xFE, indicating a descriptor being a price reference descriptor, as the unique identifier of a price reference descriptor.
descriptor_length: the length of a descriptor, an 8-bit field, the length of descriptor after this field is denoted in bytes.
reserved: reserved, it is used for future extention function. It is coded as 1 generally.
pay_mode: a pay mode, a 3-bit field. It is used to provide a pay mode to a service. The corresponding relationships between the values of pay_mode and pay modes are shown in the table of Fig. 7.
price_point_per_view: price point per view, a 24-bit field. It is used to provide the price point per view for impulse pay per view (IPPV). The price corresponding to each point can be defined by the operation business.
price_point_per_minute: price point per minute, a 24-bit field. It is used to provide the price point per minute for impulse pay per time (IPPT).
price_point_per_channel: price point per channel, a 24-bit field. It is used to provide the price per channel for pay per channel (PPC).

E. The fifth one of VOD protocol specification data structures: picture data section (picture_data_section()), the format of which is:

```
 picture_data_section() //a picture data section
 {
 table_id //8-bit, a table identifier
 section_syntax_indicator //1-bit, a section syntax indicator
 reserved_future_use //1-bit, reserved for future use
 reserved //2-bit, reserved
 section_length //12-bit, the length of section
 reserved //2-bit, reserved
 version_number //5-bit, a version number
 current_next_indicator //1-bit, a current next indicator
 picture_id //24-bit, a picture identifier
 reserved //2-bit, reserved
 sub_version_number // 5-bit, a sub-version number
 last_picture_id //24-bit, the last picture identifier
 section_number //8-bit, a section number
 last_section_number //8-bit, the last section number
 for (i11=0; i11<N11; i11++)
 {
 data_byte //8-bit, a data byte
 }
 CRC32 //32-bit, CRC32 checksum
 }
```

The semantic meaning of each field in the defined picture data section (picture_data_section()) are illustrated as follows.

Table_id: a table identifier, an 8-bit field. It is used to identify a table having the picture data section. The first table identifier is denoted by the picture data section start table identifier field (picture_data_section_start_table_id) in the linkage descriptor (linkage_descriptor()), which is the first one of VOD protocol specification data structures. The following table identifiers is increased by 1 in sequence, and the last table identifier, having the largest value, is denoted by the ending table identifier of picture data section field (picture_data_section_end_table_id) in the linkage descriptor (linkage_descriptor()), which is the first one of VOD protocol specification data structures. The value of table_id uniquely corresponds to the table identifier of picture data section field (picture_data_section_table_id) in the VOD service information section (vod_service_info_section()), which is the third one of VOD protocol specification data structures. For the specific value range, one may refere to the table of Fig.2.

Section_syntax_indicator: a section syntax indicator, a 1-bit field. It is set to '1'.

Reserved _future_use: reserved for future use. It is used for future extension.

Reserved: a reserved field. It is used for future function extension, being coded as '1' generally.

Section_length: the length of the section, a 12-bit field. It indicates the byte length of a section starting from the next byte after this field.

Version_number: a version number, a 5-bit field. It is used to provide a version number of a table having the picture data section identified by table_id. When the information of the table having the picture data section changes, the value of version_number is increased by 1. When increased to 31, it is reset to 0. Current_next_indicator: a current next indicator, a 1-bit field. As set to 1, it indicates that the current sub-table is being used. As set to 0, it indicates that the sub-table transmitted has not been used, which is the next one to be used.

Picture_id: a picture identifier, a 24-bit field. This field and the table_id field together identify a unique picture. As coded from the beginning of 0x000001, every addition of a picture makes the value of picture_id increased by 1. The picture_id uniquely corresponds to the picture identifier field (picture_id) in the VOD service information section (vod_service_info_section()), which is the third one of VOD protocol specification data structures.

Sub_version_number: a sub-version number, a 5-bit field. It gives a version number of a picture uniquely identified by table_id and picture_id. The value of sub_version_number is increased by 1 when the picture data changes. When increased to 31, the value is reset to 0.

Last_picture_id: a last picture identifier, a 24-bit field. It provides an identifier of the last picture in the table identifier by table_id. The last_picture_id is the largest identifier among all the pictures in the table identified by the table_id.

Section_number: a section number, an 8-bit field. It is used to provide a section number for a sub-table of a picture uniquely identified by table_id and picture_id. The section_number of the first section in a sub-table is labeled as 0x00. Every increase of a section having identical table_id and picture_id makes the section_number increased by 1.

Last_section_number: the last section number, an 8-bit field. It indicates the section number of the last section in a picture sub-table uniquely identified by table_id and picture_id, the last section being the section with the largest section number. The last section number field corresponds to the number of blocks field (block_number) in the VOD service information section (vod_service_info_section()), which is the third one of VOD protocol specification structures.

Data_byte: a data byte, an 8-bit field. It gives actual data of a picture.

CRC32: the CRC32 checksum, a 32-bit field. It includes the CRC value of the picture data section.

F. The sixth one of VOD protocol specification data structures: audio/video segment insertion information (av_segment_insert_info()), the format of which is:

| | |
|---|---|
| av_segment_insert_info() | // an audio/video segment insertion information |
| { | |
| vod_service_list_id | //24-bit, a VOD service list identifier |
| vod_service_id | //16-bit, a VOD service identifier |
| segment-id | //16-bit, a Segment identifier |
| } | |

The semantic meaning of each field in the defined audio/video segment insertion information (av_segment_insert_info()) are illustrated as follows.

Vod_service_list_id: a VOD service list identifier, a 24-bit field. It is used to identify a unique VOD service list in a service of a VOD service list.

Vod_service_id: a VOD service identifier, a 16-bit filed. The vod_service_list_id and the vod_service_id can identify a unique VOD service within a service of VOD service list.

Segment_id: a segment identifier, a 16-bit filed. In the network, the vod_service_id, the vod_service_id, and the segment-id can uniquely identify a certain specific segment of a VOD service. When the the segment flag field (segment_flag) in the VOD service information section (vod_service_info_section()) which is the third one of VOD protocol specification data structures being 0, the segment id field is invalid.

The logical relationships and the organization forms of data structures for the VOD protocol specification supplied by embodiments of the present invention will be described in details below.

The six kinds of data structures for the VOD protocol spcification have been described above. In the transport stream (TS), these different data structures, with the existing program specific information/service information (PSI/SI) data and the picture data, audio/video data, etc., are organized together in a certain logical relationship, and thus the VOD service list and its additional information are formed.

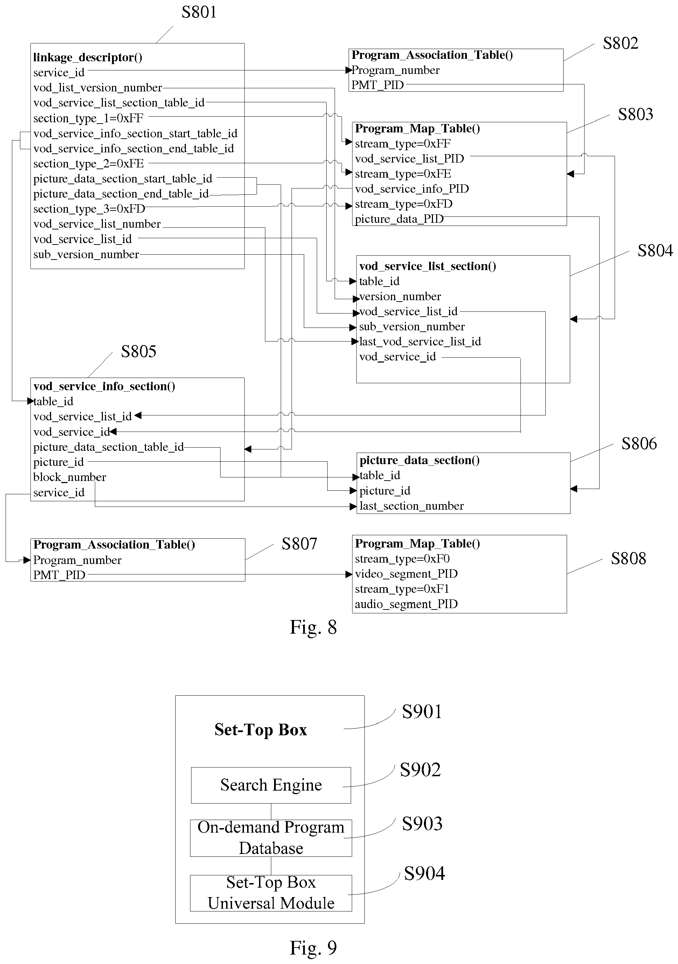

The architecture of the logical relationships and the organization forms of the data structures for VOD protocol specification is shown in FIG. 8.

Detailed illustration will be provided below for the logical relationships and the organization forms of the respective data structure in Fig. 8.

The structure S801 gives some key fields for control in the linkage descriptor identifier (linkage_descriptor()). These control fields are used to provide overall information of the VOD service list and its additional information. The structure S801 specifically includes the following key fields: a service identifier (service_id), a VOD service list version number (vod_service_list_version_number), a VOD service list section table identifier (vod_service_list_section_table_id), section type 1 (section_type_1), a VOD service information section start table identifier (vod_service_info_section_start_table_id), a VOD service information section end table identifier (vod_service_info_section_end_table_id), section type 2 (section_type_2), a picture data section start table identifier (picture_data_section_start_table_id), a picture data section end table identifier (picture_data_section_end_table_id), section type 3 (section_type_3), the number of VOD service lists (vod_service_list_number), a VOD service list identifier (vod_service_list_id), and a sub-version number (sub_version_number).

The structure S802, i.e. a program association table (PAT), is used to provide the packet identifier (PID) for the PMT of a service in VOD service list. The PAT specifically includes the following key fields: a program number (program_number) and a PID of a PMT (PMT_PID).

The structure S803, i.e. a program map table (PMT), is used to provide the type of elementary stream (ES) included by a service in VOD service list and its PID information. The PMT specifically includes the following key fields: a VOD service list stream type (stream_type=0xFF), a VOD service list PID (vod_service_list_PID), a VOD service information stream type (stream_type=0xFF), a VOD service information PID (vod_service_info_PID), a picture data stream type (stream_type=0xFD), and a picture data PID (picture_data_PID).

The structure S804, i.e. a VOD service list section (vod_service_list_section()), is used to provide the key information of the VOD service list section. The VOD service list section specifically includes the following key fields: a table identifier (table_id), a version number (version_number), a VOD service list identifier (vod_service_list_id), a sub-version number (sub_version_number), a last VOD service list identifier(last_vod_service_list id), and a VOD service identifier(vod_service_id).

The structure S805, i.e. a VOD service information section (vod_service_info_section()), is used to give the key information of the VOD service information section and specifically include the following key fields: a table identifier (table_id), a VOD service list identifier (vod_service_list_id), a VOD service identifier (vod_service_id), a picture data section table identifier (picture_data_section_table_id), a picture identifier (picture_id), the number of blocks (block_number), and a service identifier(service_id).

The structure S806, i.e. a picture data section (picture_data_section()) is used to give the key information of the picture data section and specifically includes the following key fields: a table identifier (table_id), a picture identifier (picture_id), and a last section number (last_section_number).

The structure S807, i.e. a program association table (PAT), is used to give the PID of the PMT for an audio/video segment service and specifically includes the following key fields: a program number (Program_number) and a PID of a PMT (PMT_PID).

The structure S808, i.e. a Program Map Table (PMT), is used to give the stream type and the PID information of the audio/video in the audio/video segment service and specifically includes the following key fields: a video segment stream type (stream_type=0xF0), a video segment PID (video_segment_PID), a audio segment stream type (stream_type=0xF1), and an audio segment PID (audio_segment_PID).

Wherein, the service identifier (service_id) in the linkage descriptor (linkage_descriptor()) of structure S801 is used to identify a service in VOD service list, and is uniquely associated with the program number (program_number) in the program association table (PAT) of structure S802. The VOD service list version number (vod_list_version_number) is uniquely associated with the version number (version_number) in the VOD service list section (vod_service_list_section()) of structure S804. The VOD service list section table identifier (vod_service_list_section_table_id) is uniquely associated with the table identifier (table_id) in the VOD service list section (vod_service_list_section()) of structure S804. The section type 1 (section_type_1) is uniquely associated with the VOD service list stream type (stream_type=0xFF) in the program map table (PMT) of structure S803. The VOD service information section start table identifier (vod_service_info_section_start_table_id) and the VOD service information section end table identifier (vod_service_info_section_end_table_id) are uniquely associated with the table identifier in the VOD service information section (vod_service_info_section()) of structure S805. The section type 2 (section_type_2) is uniquely associated with the VOD service information stream type (stream_type=0xFE) in the program map table (PMT) of structure S803. The picture data section start table identifier (picture_data_section_start_table_id) and the picture data section end table identifier (picture_data_section_end_table_id) are uniquely associated with the table identifier (table_id) in the structure S806 of picture data section (picture_data_section()). The section type 3 (section_type_3) is uniquely associated with the picture data stream type (stream_type=0xFD) in the program map table (PMT) of structure S803. The number of VOD service lists (vod_service_list_number) is uniquely associated with the last VOD service list identifier (last_vod_service_list_id) in the VOD service list section (vod_service_list_section()) of structure S804. The VOD service list identifier (vod_service_list_id) is uniquely associated with the VOD service list identifier (vod_service_list_id) in the VOD service list section (vod_service_list_section()) of structure S804. The sub-version number (sub_version_number) is uniquely associated with the sub-version number (sub_version_number) in the VOD service list section (vod_service_list_section()) of structure S804.

Wherein, the PID of PMT (PMT_PID) in the program association table (PAT) of structure S802 is used to give a packet identifier for the program map table (PMT) of structure S803.

Wherein, the VOD service list PID (vod_service_list_PID) in the Program Map Table (PMT) of structure S803 is used to provide the identifier of the transport stream (TS) packet which includes the VOD service list section (vod_service_list_section()) of structure S804. The VOD service information PID (vod_service_info_PID) is used to provide the identifier of the transport stream (TS) packet which includes the VOD service information section (vod_service_info_section()) of structure S805. The picture data PID (picture_data_PID) is used to provide the identifier of the transport stream (TS) packet which includes the picture data section (picture_data_section()) of structure S806.

Wherein, the VOD service list identifier (vod_service_list_id) in the VOD service list section (vod_service_list_section()) of structure S804 is uniquely associated with the VOD service list identifier (vod_service_list_id) in the VOD service information section (vod_service_info_section()) of structure S805. The VOD service identifier (vod_service_id) is uniquely associated with the VOD service identifier (vod_service_id) in the VOD service information section (vod_service_info_section()) of structure S805.

Wherein, the picture data section table identifier (picture_data_section_table_id) in the VOD service information section (vod_service_info_section()) of structure S805 is uniquely associated with the table identifier (table_id) in the picture data section (picture_data_section()) of structure S806. The picture identifier (picture_id) is uniquely associated with the picture identifier (picture_id) in the picture data section (picture_data_section()) of structure S806. The number of blocks (block_number) is uniquely associated with the last section number (last_section_number) in the picture data section (picture_data_section()) of structure S806. The service identifier (service_id) is used to identify an audio/video segment service and is uniquely associated with the program number (program_number) in the program association table (PAT) of structure S807.

Wherein, the PID of PMT (PMT_PID) in the program association table (PAT) of structure S807 is used to provide a packet identifier for the program map table (PMT) of structure S808.

Wherein, the program map table (PMT) of structure S808 is used to provide a stream type and PID information of an audio/video in an audio/video segment service. Herein, the stream_type of 0xF0 is used to provide a video segment stream type, the video_segment_PID is used to provide a video segment PID, the stream_type of 0xF1 is used to provide an audio segment stream type, and the audio_segment_PID is used to provide an audio segment PID.

Based on the logical relationships and the organization forms shown in FIG. 8, in one embodiment of the present invention, a VOD service list and its additional information can be issued in the transport stream (TS). The VOD service list and its additional information link to a unique service in the VOD service list by the transport stream identifier (transport_stream_id), the original network identifier (original_network_id), and the service identifier (service_id) in the linkage descriptor(linkage_descriptor()) of structure S801. A service in VOD service list includes elementary streams of three different types. In the elementary streams of three different types, stream types and corresponding PID information are provided by the program map table (PMT) of structure S803. The three different types of elementary streams are shown in FIG. 3. Specifically, the stream_type of the ES which accords with the syntactic structure of the VOD service list section (vod_service_list_section()) is 0xFF, the stream_type of the ES which accords with the syntactic structure of the VOD service information section (vod_service_info_section()) is 0xFE, and the stream_type of the ES which accords with the syntactic structure of the picture data section (picture_data_section()) is 0xFD. The elementary stream (ES) identified by the VOD service list PID (vod_service_list_PID) in the program map table (PMT) of structure S803 accords with the syntactic structure of the VOD service list section (vod_service_list_section()) (corresponding to the structure S804), which is the second one of VOD protocol specification data structures. The elementary stream (ES) identified by the VOD service information PID (vod_service_info_PID) in the program map table (PMT) of structure S803 accords with the syntactic structure of the VOD service information section (vod_service_info_section()) (corresponding to the structure S805), which is the third one of VOD protocol specification data structures. The elementary stream (ES) identified by the picture data PID (picture_data_PID) in the program map table (PMT) of structure S803 accords with the syntactic structure of the picture data section (picture_data_section()) (corresponding to the structure S806), which is the fifth one of VOD protocol specification data structures.

Wherein, the linkage descriptor of structure S801 further provides the overall information of the VOD service list and its additional information, specifically including: the VOD service list version number, which is used to provide a general version number of the VOD service list and is applied when the VOD service list and its additional information have an update; the VOD service list section table identifier and the section type 1 thereof (corresponding to stream_type=0xFF); the VOD service information section start table identifier, the VOD service information section end table identifier, and the section type 2 thereof (corresponding to stream_type=0xFE); the picture data section start table identifier, the picture data section end table identifier, and the section type 3 thereof (corresponding to stream_type=0xFD); the number of VOD service lists, which is used to provide a total number of the VOD service lists corresponding to the number of servers, namely, one VOD server corresponding to one VOD service list; the VOD service list identifier and the sub-version number, which are used to provide an identifier of VOD service list and a sub-version number thereof, and are applied when updating the VOD service list.

Wherein, the data structure of TS packet identified by the audio/video segment PID in the program map table (PMT) of structure S808 has some differences with the data structure of a conventional audio/video TS packet. More specifically, a conventional audio/video TS packet is formed by packing an audio/video elementary stream (ES) into a packetized elementary stream (PES) and then packing the packetized elementary stream (PES) into the transport stream (TS) packet by multiplexing. While, when the audio/video elementary stream (ES) in the audio/video segment service is packaged into the packetized elementary stream (PES), the audio/video segment insertion information (av_segment_insert_info()) defined in the sixth one of the VOD protocol specification data structures is inserted before the ES. In the inserted audio/video segment insertion information (av_segment_insert_info()), the VOD service list identifier (vod_service_list_id), the VOD service identifier (vod_service_id), and the segment identifier (segment_id) can identify a unique VOD service or a unique VOD service segment, thereby the audio/video segment service can be uniquely associated with a VOD service or a VOD service segment.

Based on the logical relationships and the organizational manner described above, in one embodiment of the present invention, a VOD service list and its additional information can be issued in a transport stream (TS). The VOD service list comprises the following key information: a VOD service list identifier, a VOD server IP address, a backup VOD server IP address, the number of VOD services, a VOD service identifier, a VOD service type, a VOD service priority, and a VOD service name byte. The VOD service type can have 15 different kinds of service types, particularly refering to the FIG. 4. The VOD service priority can identify 256 (28) different kinds of service priorities.

Wherein, the additional information of the VOD service list includes the following key information: a VOD service list identifier, a VOD service identifier, a descriptor, and a VOD service information type. The descriptor could be either the price reference descriptor (price_reference_descriptor()) defined in the fourth one of VOD protocol specification data structures or other descriptors. The VOD service information type is further divided into four respective types as the text description, the picture description, the performer list, and the audio/video segment, the four respective types having respective data structures and key fields. The text decription contains the following key fields: a segment flag, a duration of a service or a segament, a text character providing the text description, the number of segments, and a segment identifier. The picture decription contains the following key fields: a picture data section table identifier, a picture identifier, a picture format, a picture size, and the numbr of blocks, which used to give the overall control information of a picture related to the VOD service. The performer list contains the following key fields: the number of performers, a performer name byte, and a performer information byte. The audio/video segment contains the following key fields: a transport stream identifier, an original network identifier, and a service identifier, which are used to identify a unique audio/video segment service.

Wherein, the price reference descriptor (price_reference_descriptor()) provides information related to price reference of the VOD service. The price reference descriptor includes the following key information: a pay mode. Different values of pay_modes correspond to different pay modes and different key words. The pay mode includes impulse pay per view (IPPV), impulse pay per time (IPPT), and pay per click (PPC), wherein, for the impulse pay per view (IPPV), a price point per view of a key word is provided; for the impulse pay per time (IPPT), a price point per minute of a key word is provided; and for the pay per click (PPC), a price point per channel of a key word is provided.

Wherein, the picture description is used to describe a picture data section (picture_data_section()). The picture data section provides picture data related to a VOD service and includes the following key information: a table identitifier, a picture identifier, a last picture identifier, and actual data bytes of a picture.

Wherein, the audio/video segment service indicates an audio/video segment elementary stream (ES) before which audio/video segment insertion information (av_segment_insert_info()) defined in the sixth one of VOD protocol specification data structures is inserted when the audio/video segment elementary stream (ES) is encapsulated into a transport stream (TS). The audio/video segment insertion information (av_segment_insert_info()) provides information uniquely associated with the audio/video segment service and a VOD service or VOD service segment. The audio/video segment insertion information includes the following key fields: a VOD service list identifier, a VOD service identifier, and a segment identifier. The audio/video segment service is uniquely associated with the VOD service or VOD service segment by the above three identity fields.

Typically, in an actual network, a service in a VOD service list and its additional information are issued in a transport stream (TS), and a linkage descriptor defined in the first one of VOD protocol specification data structures is added into an NIT or a BAT of other transport stream (TS) to link to the service in VOD service list. The service in VOD service list and its additional information are broadcasted repeatedly in the transport stream (TS) in a data carousel manner.

The set-top box is a bi-directional set-top box having network backhaul capabilities and possesses some special function modules compared with conventional bi-directional set-top boxes. Its specific structure is shown in Fig. 9.

The set-top box S901 consists of three modules and specifically includes: a set-top box universal module S904, an on-demand program database S903, and a search engine S902.

Wherein, the set-top box universal module S904 refers to common modules included in conventional bi-directional set-top boxes. However, there may be no browser integrated in the module.

Wherein, the on-demand program database S903 is used to store a VOD service list and its additional information. The VOD service list and its additional information include: a VOD service list, VOD service price information, a VOD service or VOD service segment brief introduction, a picture description, a performer list as well as a performer brief introduction, and an audio/video segment. The VOD service list and its additional information are stored according to fixed data structures, and for the particualr data structures, one may refer to the VOD protocol specification data structures. The VOD service list and its additional information are stored in a storage device. The storage device may be a built-in storage device in a set-top box or may be an external storage device.

Wherein, the search engine S902 is used to search the information of the program that a user wants to watch in the on-demand program database S903. The user may conduct a search for the following key words in an on-demand program search interface according to the VOD service list and its additional information given by the data structures provided in the VOD protocol specification data structures: a VOD service name, a performer name, and a VOD service type.

A process flow for a set-top box parsing the VOD service list and its additional information in one embodiment of the invention will be illustrated below.

From the above logical relationships and organizational manner of the VOD protocol specification data structures, a transport stream (TS) including a VOD service list and its additional information can be obtained.

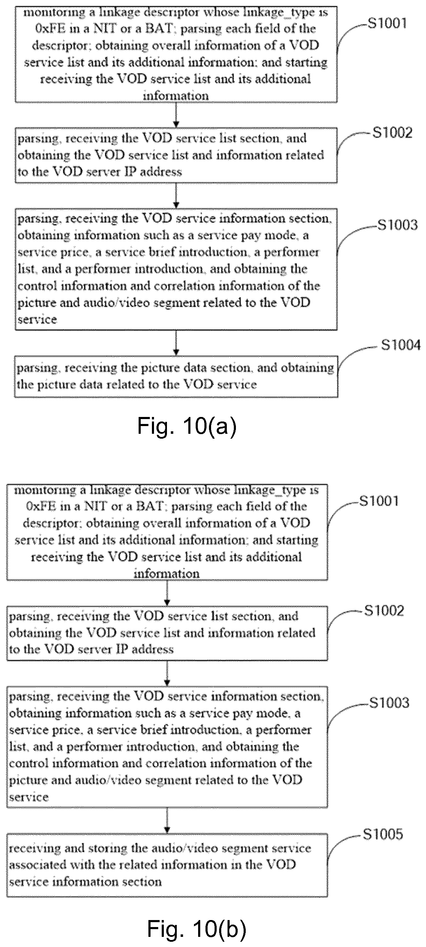

As a set-top box which has the structure shown in Fig. 9 parses the VOD service list and its additional information, an on-demand program database may be formed on the set-top box side. A process flow of the set-top box parsing the VOD service list and its additional information is shown in Fig. 10.

Step S1001 is: monitoring a linkage descriptor whose linkage_type is 0xFE in a NIT or a BAT; parsing each field of the descriptor; obtaining overall information of a VOD service list and its additional information; and starting receiving the VOD service list and its additional information.

It is recommended that the set-top box parsing the VOD service list and its additional information may be completed in a program searching process.

In the program searching process, the set-top box monitors a linkage descriptor (linkage_descriptor()) whose linkage type (linkage_type) is 0xFE in a NIT or a BAT, and parses each field of the descriptor according to the syntactic structure of the linkage descriptor (linkage_descriptor()), which is the first one of VOD protocol specification data structures. The linkage descriptor (linkage_descriptor()) links to a service in VOD service list. The service in VOD service list is uniquely identified by the following three key fields in the linkage descriptor: a transport stream identifier (transport_stream_id), an original network identifier (original_network_id), and a service identifier (service_id). The physical frequency in which the service in VOD service list is transmitted corresponds one by one to the transport stream (TS) uniquely identified by the transport stream identifier (transport_stream_id) and the original network identifier (original_network_id) in the linkage descriptor. The physical frequency in which the service in VOD service list is transmitted is uniquely provided by a delivery system descriptor in a network information table (NIT), the delivery system descriptor corresponding to the transport stream (TS) uniquely identified by the transport stream identifier (transport_stream_id) and the original network identifier (original_network_id) in the linkage descriptor. The delivery system descriptor is defined in detail in the SI specification, and it can be a cable delivery system descriptor (cable_delivery_system_descriptor()), a satellite delivery system descriptor (satellite_delivery_system_descriptor()), and a terrestrial delivery system descriptor (terrestrial_delivery_system_descriptor()).

A base band transport stream (TS) is obtained by the set-top box side locking the frequency according to the parameter information including frequency and so on provided in the delivery system descriptor. After obtaining the baseband transport stream (TS), the set-top box side starts the demultiplexing process. The service identifier (service_id) in the linkage descriptor can uniquely identify a service in the obtained baseband transport stream (TS), and the service is a service in VOD service list. The set-top box parses a program association table (PAT) firstly. The service identifier (service_id) in the linkage descriptor is uniquely associated with the program number (program_number) in the program association table (PAT), and thus the PID of the program map table (PMT_PID) for the service in VOD service list can be obtained. By parsing the program map table (PMT) identified by PMT_PID, the PID of an elementary stream (ES) included by the service in VOD service list can be obtained, and so can the stream type (stream_type) of the elementary stream (ES). Wherein, the elementary stream (ES) and the stream type (stream_type) of the elementary stream (ES) include: a VOD service list section (vod_service_list_section()) with a stream type 0xFF, a VOD service information section (vod_service_info_section()) with a stream type 0xFE, and a picture data section (picture_data_section()) with a stream type 0xFD. The PID of the elementary stream (ES) includes: a VOD service list PID (vod_service_list_PID), a VOD service information PID (vod_service_info_PID), and a picture data PID (picture_data_PID). Wherein, the VOD service list PID (vod_service_list_PID) is used to provide an identifier of packet in the transport stream (TS) having the VOD service list section (vod_service_list_section). The VOD service information PID (vod_service_info_PID) is used to provide an identifier of packet in the transport stream (TS) having the VOD service information section (vod_service_info_section). The picture data PID (picture_data_PID) is used to provide an identifier of packet in the transport stream (TS) having the picture data section (picture_data_section).

By parsing the linkage descriptor (linkage_descriptor()), the overall information of the VOD service list and its additional information can further be obtained, including: a VOD service list version number (vod_list_version_number), a force flag (force_flag), a VOD service list section table identifier (vod_service_list_section_table_id), section type 1 (section_type_1), a VOD service information section start table identifier (vod_service_info_section_start_table_id), a VOD service information section end table identifier (vod_service_info_section_end_table_id), section type 2 (section_type_2), a picture data section start table identifier (picture_data_section_start_table_id), a picture data section end table identifier (picture_data_section_end_table_id), section type 3 (section_type_3), the number of VOD service lists (vod_service_list_number), a VOD service list identifier (vod_service_list_id), and a sub-version number (sub_version_number). The VOD service list version number is used to provide a general version number of the VOD service list, and is used when the VOD service list data have an update. The force flag is a flag bit, which is used to indicate whether a forced update is conducted or not when the VOD service list version nunber changes. When the value of the force flag is 1, it indicates that a forced update is conducted, and when the value of the force flag is 0, it indicates that the update will be conducted upon the next start or the user entering the on-demand interface. The VOD service list section table identifier is used to identify a table having the VOD service list section. The section type 1 is used to provide the data structure of VOD service list section. It corresponds to the stream type of the VOD service list section elementary stream described in the PMT of the service in VOD service list and is fixed to 0xFF. The VOD service information section start table identifier and the VOD service information section end table identifier are respectively used to provide a start table identifier and an end table identifier of the VOD service information section. The VOD service list section table identifier is used to identify a table of VOD service list section. The section type 2 is used to provide the data structure of the VOD service information section. It corresponds to the stream type of the VOD service information section elementary stream described in the PMT of the service in VOD service list and is fixed to 0xFE. The picture data section start table identifier and the picture data section end table identifier are respectively used to provide a start table identifier and an end table identifier of the picture data section. The section type 3 is used to provide the data structure of the picture data section. It corresponds to the stream_type of the picture data section elementary stream described in the PMT of the service in VOD service list and is fixed to 0xFD. The number of VOD service lists is used to provide the nunber of VOD service lists and corresponds to VOD servers, one VOD server corresponds to one VOD service list. The VOD service list identifier is used to uniquely identify a VOD service list within a service of VOD service list. The sub-version number is used to provide a version nunber of the VOD servise list identified by the VOD service list identifier.

Based on the parsing above, the overall information of the VOD service list and of its additional information is obtained. Further, the PID information of the VOD service list, the VOD service information, and the PID information of the picture data elementary stream (ES) are obtained. Accordingly, related control information for subsequent reception and storage of the VOD service list and its additional information is provided.

All the information obtained above is stored in the on-demand program database on the set-top box side, which provides related control information for reception of the VOD service list and its additional information.

Step S1002 is: parsing, recieving the VOD service list section, and obtaining the VOD service list and information related to the VOD server IP address.

According to the VOD service list PID obtained in step S1001, VOD service list section data can be obtained, wherein the syntactic structure and semantic meaning of the VOD service list section is provided by the VOD service list section (vod_service_list_section()), which is the second one of the VOD protocol specification data structures. By parsing the transport stream (TS) package identified by the VOD service list PID according to this syntactic structure, a complete VOD service list can be obtained. The VOD service list section (vod_service_list_section()) contains the following key fields: a table identifier (table_id), the length of the section (section_length), a version number (version_number), a VOD service list identifier (vod_service_list_id), a sub-version number (sub_version_number), a last VOD service list identifier (last_vod_service_list_id), a section number (section_number), a last section number (last_section_number), a VOD server IP address (vod_server_ip), a backup VOD server IP address (backup_vod_server_ip), the number of VOD services (vod_service_number), a VOD service identifier (vod_service_id), a VOD service type (vod_service_type), a VOD service priority (vod_service_priority), an ISO 693-2 language code (ISO 639-2_language_code), the length of a VOD service name (vod_service_name_length), a VOD service name byte (vod_service_name_byte), and a CRC32 checksum (CRC32).

Wherein, for specific semantic meaning of each field in the VOD service list section (vod_service_list_section()), one may refere to the semantic description of the key fields contained in the VOD service list section (vod_service_list_section()), which is the second one of the VOD protocol specification data structures,.

Wherein, accroding to the syntactic structure defined in the VOD service list section (vod_service_list_section()), which is the second one of the VOD protocol specification data structures, the set-top box having the stucture shown in Fig. 9 receives and stores the VOD service lists. The VOD service list is stored into a on-demand program database on the set-top box side. The VOD service list is stored by taking a VOD service list uniquely identified by a VOD service list identifier within a service of VOD service list as a unit. The VOD service list is packaged in the VOD service list section. The VOD service list section is identified by the table identifier. The table identifier corresponds to the VOD service list identifier field (vod_service_list_section_table_id) in the linkage descriptor (linkage_descriptor()) which is the first one of the VOD protocol specification data structures and is fixed as 0x80, this field being obtained in step S1001. The VOD service list identifier corresponds to the VOD service list identifier (vod_service_list_id) in the linkage descriptor (linkage_descriptor()) which is the first one of the VOD protocol specification data structures, this field being obtained in step S1001. The number of the sections contained in the VOD service list is provided by the last section number field. The number of the VOD service lists is provided by the last VOD service list identifier field and corresponds to the number of VOD service lists field (vod_service_list_number) in the linkage descriptor (linkage_descriptor()) which is the first one of the VOD protocol specification data structures, this field being obtained in step S1001. The version number in the VOD service list section is used to give a general version number of the VOD service list. It is used when the VOD service list and its additional information have an update and corresponds to the VOD service list version number field (vod_list_version_number) in the linkage descriptor (linkage_descriptor()) which is the first one of the VOD protocol specification data structures, this field being obtained in step S1001. The sub-version number in the VOD service list section is used to give a sub-version number of the VOD service list. It is used when the VOD service list and its additional information have an update and corresponds to the VOD service list version number field (vod_list_version_number) in the linkage descriptor (linkage_descriptor()) which is the first one of the VOD protocol specification data structures, this field being obtained in step S1001. The VOD server IP address and the backup VOD server IP address in the VOD service list section are used for identifying a VOD server and a backup VOD server, respectively. The backup VOD server is a backup of the VOD server and has service content completely consistent with the VOD server's. Each of the VOD servers and each of the backup VOD servers correspond to one VOD service list, that is, correspond one by one to the VOD service list uniquely identified by the vod_service_list_id field in the VOD service list section (vod_service_list_section()) within one service in VOD service list. The number of VOD services in the VOD service list identified uniquely by the vod_service_list_id field within one service in VOD service list is provided by the number of VOD services field. The VOD service identifier in the VOD service list can identify a unique VOD service, the VOD service list being identified uniquely by the vod_service_list_id field within one service in VOD service list. The service type of the VOD service identified by the VOD service identifier is provided by the VOD service type field. The service types are shown in the table of Fig 4. The priority of the VOD service which is identified by the VOD service identifier is provided by the VOD service priority field, and the name of the VOD service with high priority would be preferentially displayed in the on-demand interface. The service name of the VOD service identified by the VOD service identifier is provided by the VOD service name byte field. The language adopted by the VOD service name byte is provided by the ISO 639-2 language code field. The length of the VOD service name byte is provided by the length of the VOD service name field.

Wherein, the validity of the VOD service list section (vod_service_list_section()) is ensured by the CRC32 checksum field. If the CRC32 check fails, the currently received data section will be discarded and this section will be received again.

The reception of the VOD service list is controlled according to the control information obtained in step S1001, and the complete VOD service list received is stored into the on-demand program database on the set-top box side.

Step S1003 is: parsing, receiving the VOD service information section, obtaining information such as a service pay mode, a service price, a service brief introduction, a performer list, and a performer introduction, and obtaining the control information and correlation information of the picture and audio/video segment related to the VOD service.

The VOD service information section data can be obtained according to the VOD service information PID obtained in Step S1001, wherein the syntactic structure and the semantic meaning of the VOD service information section is provided by the VOD service information section (vod_service_info_section()) which is the third one of the VOD protocol specification data structures. By parsing transmission stream (TS) packet identified by the VOD service information PID according to the above syntactic structure, the information related to the VOD service can be obtained.

Wherein, the VOD service information section (vod_service_info_section()) contains the following key fields: a table identifier (table_id), the length of the section (section_length), a version number (version_number), a sub-table identifier (sub_table_id), a sub-version number (sub_version_number), a last sub-table identifier (last_sub_table_id), a VOD service list identifier (vod_service_list_id), a section number (section_number), a last section number (last_section_number), a VOD service identifier (vod_service_id), the length of a VOD service descriptor (vod_service_descriptor_length), a descriptor (descriptor()), a VOD service information type (vod_service_info_type), a segment flag (segment_flag), a duration (duration), an ISO 639-2 language code (ISO 639-2_language_code), the length of VOD service information (vod_service_info_length), a text character (text_char), the number of segments (segment_number), a segment identifier (segment_id), the length of segment information (segment_info_length), a picture data section table identifier (picture_data_section_table_id), a picture identifier (picture_id), a picture format (picture_format), a picture size (picture_size), the numbr of blocks (block_number), the number of performers (performer_number), the length of performer name (performer_name_length), a performer name byte (performer_name_byte), the length of performer information (performer_info_length), a performer information byte (performer_info_byte), a transport stream identifier (transport_stream_id), an original network identifier (original_network_id), a service identifier (service_id), and a CRC32 checksum (CRC32).

Wherein, for specific semantic meaning of the key fields contained in the VOD service information section (vod_service_info_section()), one may refer to the semantic description of respective fields in the VOD service information section (vod_service_info_section()) which is the third one of the VOD protocol specification data structures.

Wherein, accroding to the VOD service information section (vod_service_info_section()) which is the third one of the VOD protocol specification data structures, the set-top box having the stucture shown in Fig 9 receives and stores information related to the VOD service. The information related to the VOD service is stored in the on-demand program database in the set-top box.

Wherein, the table identifier is used to identify the table having the VOD service information section and corresponds to the VOD service information section start table identifier field (vod_service_info_section_start_table_id) and the VOD service information section end table identifier field (vod_service_info_section_end_table_id) in the linkage descriptor (linkage_descriptor()) which is in the first one of the VOD protocol specification data structures, these two fields being obtained in step S1001. The table identifier and the sub-table identifer fields identify a unique sub-table. The number of sub-tables in the table identified by the table identifier is determined by the last sub-table identifier field. The version identified by the table identifier is provided by the version number field and is used when the VOD service list and its additional information have an update. The sub-table contains a plurality of sections. The current section is identified by the section number field, and the number of contained sections is give by the last section number field. The length of the current section identified by the section number field is provided by the length of the section field.

In the implementation, the information related to the VOD service is correlated with a unique VOD service by the VOD service list identifier and the VOD service identifier. The VOD service list identifier can identify a unique VOD service list within a service of VOD service list and corresponds to the VOD service list identifier field (vod_service_list_id) in the VOD service list section (vod_service_list_section()) which is the second one of the VOD protocol specification data structures, this field being obtained in step S1002. The VOD service identifier identifies a unique VOD service within the VOD service list identified by the VOD service list identifier and corresponds to the VOD service identifier field (vod_service_id) in the VOD service list section (vod_service_list_section()) which is the second one of the VOD protocol specification data structures, this field being obtained in step S1002.

In the implementation, the information related to the VOD service may be a descriptor or different VOD service information types. The descriptor is used to describe the additional information of the VOD service, and specifically, it may be a price reference descriptor (price_reference_descriptor()) defined by the fourth one of the VOD protocol specification data structures or another descriptor. The length of the descriptor is provided by the length field of the VOD service descriptor. The different VOD service information types are provided by the VOD service information type field. Different values of the field can identify different VOD service information types. Wherein, the VOD service information type may be four different types: a text description, a picture description, a performer list, or a audio/video segment, and different types have different data structures and key fields.

In the implementation, the text description gives the following key fields: a segment flag (egment_flag), a duration (duration), an ISO 639-2 language code (ISO 639-2_language_code), the length of VOD service information (vod_service_info_length), a text character (text_char), the number of segments (segment_number), a segment identifier (segment_id), and the length of segment information (segment_info_length). The segment flag field is used to tell that whether the VOD service identified uniquely by the VOD service list identifier and the VOD service identifier is segmented. The duration field is used to give the duration of a VOD service or of a VOD service segment. The text character field is used to give a brief description of the VOD service or of the VOD service segment. The language that the brief description of the VOD service or of the VOD service segment adopted is provided by the ISO 639-2 language code field. The length of the VOD service brief description is provided by the length of VOD service information field. The length of the VOD service segment brief description is provided by the length of segment information field. The number of the VOD service segments is provided by the number of segments field. The VOD service segment is identified uniquely by the VOD service list identifier, the VOD service identifier, and the segment identifier.

In the implementation, the picture description provides the following key fields: a picture data section table identifier (picture_data_section_table_id), a picture identifier (picture_id), a picture format (picture_format), a picture size (picture_size), and the numbr of blocks (block_number). Wherein, the picture data section table identifier is used to identify the table to which the picture data section having pictures related to the VOD service belongs. The picture data section conforms to the syntactic structure of the picture data section (picture_data_section()) which is the fifth one of the VOD protocol specification data structures. The picture identifier is used to identify a unique picture in the table that the picture data section identified by the picture data section table identifier belongs to. The format of the picture is provided by the picture format field, and different values of the field give different picture formats, which may be I frame, JPG, GIF, or BMP. Different picture formats have different data structures, based on which the set-top box side decodes and displays the picture data. The data size of the picture is provided by the picture size field. The number of sections of the picture in the picture data section is provided by the numbr of blocks field.

In the implementation, the performer list gives the following key fields: the number of performers (performer_number), an ISO 639-2 language code (ISO 639-2_language_code), the length of performer name (performer_name_length), a performer name byte (performer_name_byte), the length of performer information (performer_info_length), and a performer information byte (performer_info_byte). Wherein, the number of performers field gives the number of primary performers in the VOD service uniquely identified by the VOD service list identifier and the VOD service identifer. The performer name byte field is used to provide the performers' names. The length of performers' names is provided by the length of performer name field. The performer information byte field is used to provide an information introduction of the roles that the performers play in the VOD service. The length of the information introduction is provided by the length of performer information field. The language that the performers' names and the information introduction adopt is provided by the ISO 639-2 language code.

In the implementation, the audio/video segment provides the following key fields: a transport stream identifier (transport_stream_id), an original network identifier (original_network_id), and a service identifier (service_id). These three fields serve as a linkage descriptor, which link to an audio/video segment service. The transport stream identifier and the original network identifier identify a unique transport stream (TS) within the network. The information of the physical frequency point in which the transport stream (TS) is transmitted is described in a transport system descriptor in the second loop of a network information table (NIT).

In the implementation, the syntactic structure of the price reference descriptor is provided by the price reference descriptor (price_reference_descriptor()) which is the fourth one of the VOD protocol specification data structures. The descriptor provides the following key fields: a descriptor tag (descriptor_tag), the length of descriptor (descriptor_length), a pay mode (pay_mode), a price point for per view (price_point_per_view), a price point for per minute (price_point_per_minute), and a price point for per channel (price_point_per_channel). Wherein, the descriptor tag is fixed as 0xFE here, indicating that the descriptor is a price reference descriptor. Different values of the pay mode field correspond to different pay modes and key fields. The pay modes include impulse pay per view (IPPV), impulse pay per time (IPPT), and pay per click (PPC). Wherein, the impulse pay per view provides the price point for per view; the impulse pay per time provides the price point for per minute; and the pay per click provides the price point for per channel. The length of the pay modes and the key fields is provided by the length of descriptor field. The prices that the price points correspond to are defined by the operaters.

In the implementation, the validity of the VOD service information section (vod_service_info_section()) is ensured by the CRC32 checksum field. If the CRC32 check fails, the currently received data section will be discarded and this section will be received again.

According to the relevant information obtained in step S1001 and step S1002, the reception of the VOD service information section is controlled, and the completely received VOD service information section is stored into the on-demand program database on the set-top box side.

Step S1004 is: parsing, receiving the picture data section, and obtaining the picture data ralated to the VOD service.

The reception of a picture data related to the VOD service is controled by the related information obtained according to step S1001, step S1002, and step S1003.

A picture data can be obtained according to the picture data PID obtained in step S1001. The picture data is encapsulated in the picture data section (picture_data_section()) defined by the fifth one of VOD protocol specification data structures. According to the syntactic structure of the picture data section parsing the transport stream (TS) packet identified by the picture data PID, the picture data related to the VOD service is obtained.

Wherein, the picture data section (picture_data_section()) includes the following key fields: a table identifier (table_id), the section length (section_length), a version number (version_number), a picture identifier (picture_id), a sub-version number (sub_version_number), the last picture identifier (last_picture_id), a section number (section_number), the last section number (last_section_number), a data byte (data_byte), a CRC32 checksum (CRC32).

In the concrete implementation, the semantics of the key fields included in the picture data section(picture_data_section())refers to the semantic illustrations of each field in the picture data section (picture_data_section()), which is the fifth one of VOD protocol specification data structures.

In the implementation, the set-top box having the structure shown in Fig. 9 receives and stores the picture data according to the syntactic structure defined by the picture data section (picture_data_section()). The picture data is stored into the on-demand program database of the set-top box.

In the implementation, the table identifier is used to identify a table having the picture data section and corresponds to the picture data section start table identifier field (picture_data_section_start_table_id) and the picture data section end table identifier field (picture_data_section_start_table_id) in the linkage descriptor (linkage_descriptor()) which is the first one of VOD protocol specification data structures, these two fields being obtained in step S1001. Meanwhile, the table identifier corresponds to the picture data section table identifier field (picture_data_section_table_id) in the VOD service information section (vod_service_info_section()) which is the third one of VOD protocol specification data structures, this field being obtained in step S1003. The picture identifier field and the table identifier field identify a unique picture, and correspond to the picture identifier field (picture_id) in the VOD service information section (vod_service_info_section()) which is the third one of VOD protocol specification data structures, this field being obtained in step S1003. The number of sections included in the picture is denoted by the last section number field. The last section number corresponds to the number of blocks field (block_number) in the VOD service information section (vod_service_info_section()) which is the third one of VOD protocol specification data structures, this field being obtained in step S1003. The current section of the picture data is identified by the section number field. The length of the current section of the picture data is denoted by the section length field. The version of the table having the picture data section is denoted by the version number field, which is used when the VOD service list and its additional information are updated. The picture version is denoted by the sub-version number, which is used when the VOD service list and its additional information are updated. The number of pictures included in the picture data section table identified by the table identifier is denoted by the last picture identifier field. The actual data of the picture is denoted by data byte field.

In the implementation, the validity of the picture data section (picture_data_section()) is guaranteed by the CRC32 checksum field. When CRC32 check fails, the current receiving data section is abandoned, and the section is re-received.

The related information obtained according to step S1001, step S 1002, and step S1003 controls the reception of the picture data section, and the total received picture data is stored in the on-demand program database on the set-top box side.

Step S1005 is: receiving and storing the audio/video segment service associated with the related information in the VOD service information section.

The related information obtained according to step S1001, step S1002, step S1003 controls the reception of an audio/video segment data ralated to a VOD service or a VOD service segment.

In the implementation, the described key fields of the audio/video segment obtained in step S1003 can identify a unique audio/video segment service. The key fields described in the audio/video segment includes: a transport stream identifier (transport_stream_id), an original network identifier (original_network_id), and a service identifier (service_id). The key fields described in the audio/video segment serve as a linkage descriptor linking to an audio/video segment service. The transport stream identifier and the original network identifier identify a unique transport stream (TS) in the network. The physical frequency point information of the transport stream (TS) is described in the transmission system descriptor in the second loop of the network information table (NIT).

In the implementation, the set-top box having the structure shown in Fig. 9 carries out the frequency locking and the demodulation according to the obtained physical frequency information to get the baseband transport stream (TS). The key field of service identifier described in the audio/video segment obtained in step S1003 can identify a unique service in the obtained baseband transport stream (TS), the service being an audio/video segment service. The PID of PMT in the audio/video segment service is described in the program association table (PAT) in the baseband transport stream (TS). The program association table (PAT) provides the following key information: a program number (program_number) and a PID of PMT (PMT_PID). The program number is uniquely associated with the key field of the service identifier described in the audio/video segment, which is obtained in step S1003. The PMT_PID is ued to identify the transport stream (TS) packet having the audio/video segment service program map table (PMT). The program map table (PMT) is used to provide the audio/video stream type and the PID information for the audio/video segment service, specifically includes the following key fields: the video segment stream type (stream_type=0xF0), a video segment PID (video_segment_PID), the audio segment stream type (stream_type=0xF1), an audio segment PID (audio_segment_PID). The video segment PID is used to provide an identifier of the transport stream (TS) packet having the video elementary stream (ES). The audio segment PID is used to provide an identifier of the transport stream (TS) packet having the audio elementary stream (ES). The data structure of the transport stream (TS) packet having the audio/video elementary stream (ES) identified by the video segment PID and the audio segment PID has some differences from the data structure of the conventional audio/video transport stream packet according with the MPEG2 system layer specification. The differences lie in that: a conventional audio/video TS packet is formed by packing an audio/video elementary stream (ES) into a packetized elementary stream (PES) and then packing the packetized elementary stream (PES) into the transport stream (TS) packet by multiplexing; while, when an audio/video elementary stream (ES) in the audio/video segment service is packaged into a packetized elementary stream (PES), the audio/video segment insertion information (av_segment_insert_info()) defined in the sixth one of the VOD protocol specification data structures is inserted before the ES, and then, the packetized elementary stream (PES) is packed into the transport stream (TS) packet by multiplexing. The audio/video segment insertion information (av_segment_insert_info()) includes the following key fields: a VOD service list identifier (vod_service_list_id), a VOD service identifier (vod_service_id), and a segment identifier (segment_id). The VOD service list identifier identifies a unique VOD service list within a service in VOD service list. The VOD service identifier identifies a unique VOD service in the VOD service list identified by the VOD service list identifier. The segment identifier identifies a unique VOD service segment in the VOD service uniquely identified by the VOD service list identifier and the VOD service identifier, and this field is invalid when the segment flag field (this field is obtained in step S403) in the VOD service information section (vod_service_info_section()) which is the third one of VOD protocol specification data structures being 0. The VOD service list identifier, the VOD service identifier, and the segment identifier can uniquely identify a unique VOD service or a unique VOD service segment in a service in VOD service list and thereby uniquely associate the audio/video segment servie with the unique VOD service or the unique VOD service segment. The VOD service list identifier, the VOD service identifier, and the segment identifier serve as a tag for uniquely associating the audio/video segment service with the VOD service or the VOD service segment. The audio/video segment service is stored, taking an audio/video segment identified by the tag as a unit, in the on-demand program database in the set-top box having the structure shown in Fig. 9.

In the following description, a process flow of how a set-top box updates a VOD service list and its additional information in one embodiment of the present invention will be illustrated.

When the VOD service in the front end has an update, the corresponding VOD service list and its additional information will also be updated. Specifically, data encapsulating the VOD service list and its additional information in a transport stream (TS) issued by broadcasting will updates correspondingly. That is, the content of data in the data structures described in the first to the sixth one of the VOD protocol specification data structures will updates correspondingly. Wherein, the update is identified by a variation of version number. When the VOD service list has an update, the VOD service list version number field (vod_list_version_number) in the linkage descriptor (linkage_descriptor()) which is the first one of VOD protocol specification data structures will be increased by '1' on the basis of the former value. Moreover, when the VOD service list identified by the VOD service list identifier field (vod_service_list_id) in the linkage descriptor (linkage_descriptor()) which is the first one of VOD protocol specification data structures has an update, the corresponding sub-version number field (sub_version_number) will be increased by '1' on the basis of the former value. For a VOD service list which having no VOD service updated, the corresponding sub-version number field (sub_version_number) will not be changed. Correspondingly, when the VOD service list identified by the VOD service list identifier has an update, both of the version number field (version_number) in the VOD service list section (vod_service_list_section()) inluding it and the sub-version number field (sub_version_number) corresponding to the VOD service list will be changed correspondingly. The version number field (version_number) and the sub-version number field (sub_version_number) in the VOD service information section (VOD_service_information_section) associated with the changed VOD service list will be changed correspondingly. The version number field (version_number) and the sub-version number field (sub_version_number) in the picture data section (picture_data_section()) associated with the changed VOD service list will also be changed correspondingly.

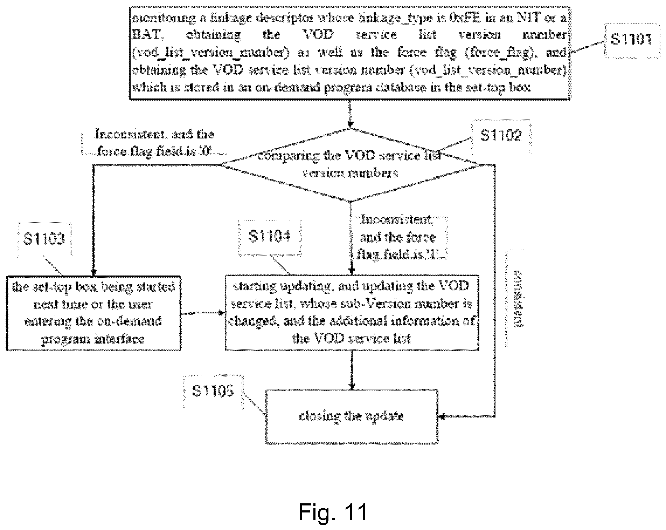

For the VOD service update in the front end, the set-top box side will have a corresponding handling process for update . A particular process flow of how the set-top box side updates the VOD service list and its additional information is shown in Fig.11.

Step S1101 is: monitoring a linkage descriptor whose linkage_type is 0xFE in an NIT or a BAT, obtaining the VOD service list version number (vod_list_version_number) as well as the force flag (force_flag), and obtaining the VOD service list version number (vod_list_version_number) which is stored in an on-demand program database in the set-top box.

The set-top box keeps monitoring a linkage descriptor whose linkage_type is 0xFE in an NIT or a BAT; obtains the VOD service list version number field (vod_list_version_number) and the force flag field (force_flag) in the linkage descriptor; and obtains the VOD service list version number (vod_list_version_number) stored in the on-demand program database on the set-top box side.

The VOD service list version number in the linkage descriptor obtained by the set-top box and the VOD service list version number in the on-demand program database on the set-top box side will be a basis for judging whether the VOD service list and its additional information will be updated in the step S1102.

Step S1102 is: comparing the VOD service list version numbers.

The set-top box which has the structure shown in Fig.9 judges whether to update the VOD service list as well as the way of update according to the related infomation obtained in step S1101. Wherein, the related infomation obtained in step S1101 includes: the VOD service list version number field and the force flag field in the linkage descriptor whose linkage type is 0xFE, and the VOD service list version number field stored in the on-demand program database on the set-top box side.

Wherein, comparing the VOD service list version numbers refers to comparing the obtained VOD service list version number field in the linkage descriptor whose linkage type is 0xFE with the VOD service list version number field stored in the on-demand program database on the set-top box side. There are two results of the VOD service list version numbers comparison, one is that the version numbers are consistent (the version number does not change), and the other is that the version numbers are inconsistent (the version number changes).

Wherein, the set-top box which has the structure shown in Fig.9 judges whether to update the VOD service list and its additional information as well as the update manner according to the result of the VOD service list version numbers comparison and the force flag field obtained in step S1101. Different update manners correspond to different processing steps.

Wherein, when the result of the VOD service list version numbers comparison is consistent (the version number does not change), the VOD service list and its additional information will not be updated, and the processing steps turn to step S1105.

Wherein, when the result of the VOD service list version numbers comparison is inconsistent (the version number changes) and the force flag field is '0', the processing steps turn to step S1103.

Wherein, when the result of the VOD service list version numbers comparison is inconsistent (the version number changes) and the force flag field is '1', the processing steps turn to step S1104.

Step S1103 is: the set-top box being started next time or the user entering the on-demand program interface.

In step S1102, when the result of the VOD service list version numbers comparison is inconsistent (the version number changes) and the force flag field is '0', an update of the VOD service list and its additional information will be launched. Wherein, the update is not launched immediately, but launched when the set-top box starts next time or the user enters the on-demand program interface. For contents to be updated and the update method, one may refer to step S1104.

Step S1104 is: starting updating, and updating the VOD service list whose sub-version number is changed and the additional information of the VOD service list.

When the result of the VOD service list version numbers comparison is inconsistent (the version number changes) in step S1102, the VOD service list and its additional information need to be updated.

Wherein, the update only directs at a VOD service list whose sub-version number has been changed, and a VOD service list whose sub-version number has not been changed will not be updated. Said VOD service list is a VOD service list uniquely identified by a VOD service list identifier within a VOD service list service. Said sub-version number is a version number of the VOD service list uniquely identified by the VOD service list identifier. Said update means that the VOD service list whose sub-version number has been changed and its additional information need to be re-received, be stored in the on-demand program database on the set-top box side, and replace the VOD service list identified by the same VOD service list identifier and its additional information. Said VOD service list and its additional information refer to a VOD service list identified by a VOD service identifier and additional information related to the VOD service list. Said additional information refer to information associated with a VOD service provided by a VOD service information section, information related to a price of the VOD service provided by a price reference descriptor, information of picture data provided by a picture data section, and identification information of an audio/video segment service provided by audio/video segment insertion information.

Wherein, for obtaining the VOD service list and its additional information, one may refer to Figs. 10(a) and 10(b) and illustration of the steps therein.

Step S1105 is: closing the update.

When the result of the VOD service list version numbers comparison is equal (the version number does not change) in step S1102, the VOD service list and its additional information will not be updated. The processing steps turn to this step, and the update is closed.

When the update of the VOD service list whose sub-version number has changed and its additional information has finished in step S1104 and the related information has been stored in the on-demand program database on the set-top box side, the processing steps turn to this step, and the update is closed.

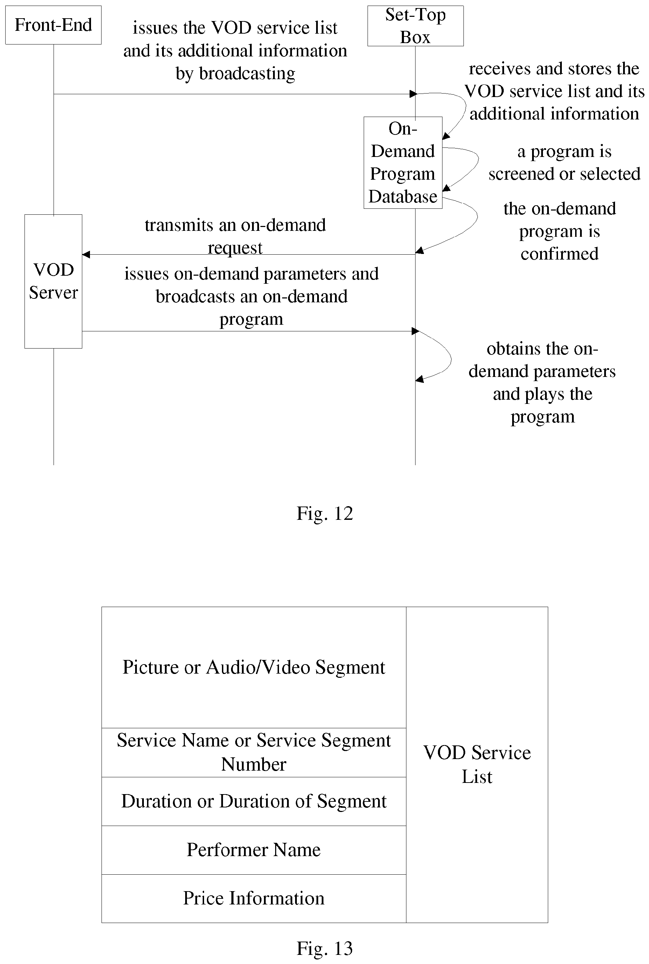

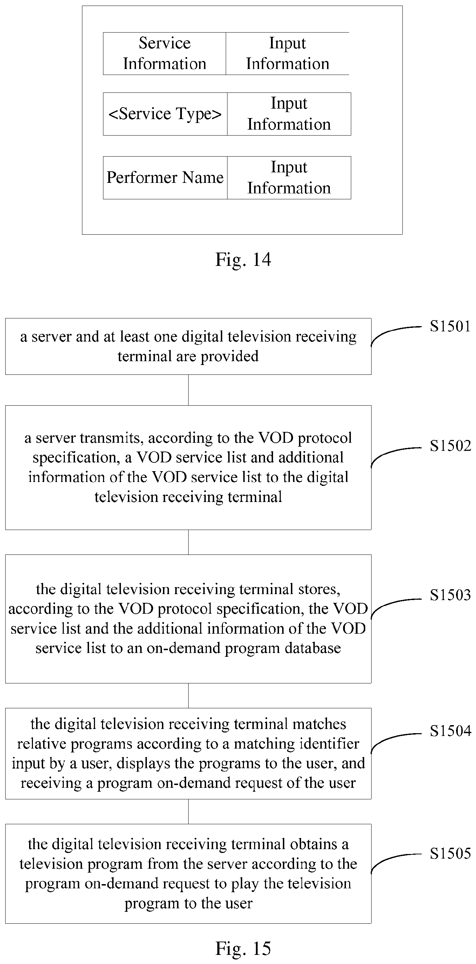

The process flow of video-on-demand shown in FIG. 12 includes the following steps.
(1) The front-end issues the VOD service list and its additional information by broadcasting. The front-end encapsulates the VOD service list and its additional information into a transport stream (TS) according to the data structures defined by the VOD protocol specification provided in the present invention, and issues them by broadcasting. The data structures for the VOD service list and its additional information are defined by the VOD protocol specification data structures. The logical relationships and the organization manner of the VOD protocol specification data structures have been described in detail in the structures of Fig. 8 and the illustration of the structures.
(2) The set-top box side receives and stores the VOD service list and its additional information. The bi-directional set-top box receives the VOD service list and its additional information according to the data structures defined by the VOD protocol specification, and stores the information into the on-demand program database on the set-top box side. The bi-directional set-top box has the structure shown as Fig. 9, and the included modules are shown in the structure illustration in Fig. 9. For the process and method of receiving the VOD service list and its additional information and creating the on-demand program database on the set-top box side, one may refer to the processes shown in Figs. 10(a) and 10(b) and the description of its steps, Figs. 10(a) and 10(b) showing a process that a set-top box parses a VOD service list and its additional information. For the update of the on-demand program database, one may refer to the process shown in Fig.11 and the description of its steps, Fig.11 showing a process that a set-top box updates a VOD service list and its additional information.
(3) A program is selected or screened in the on-demand program database on the set-top box side. As requiring to watch on-demand programs, a user may directly call the service list in the on-demand program database, or input information such as a service name, a service type, a performer name, and the like by a remote controller to screen a desired program in the on-demand program database via a search engine on the set-top box side.
   Wherein, the method for the user to directly call the service list in the on-demand program database refers to displaying the VOD service list and its additional information on the on-demand interface and the user selecting programs by switching the up or down key of the remote controller. A display order of the VOD service list is ranked according to the value identified by the VOD service priority (vod_service_priority) in the VOD service list section (vod_service_list_section ()), which is the second one of the VOD protocol specification data structures, a program with a larger value is ranked more anterior, and programs having equivalent values are ranked by the names of the VOD services. The on-demand interface refers to the interface where the VOD service list and its additional information are displayed, as shown in FIG. 13.
   In the implementation, the method of inputting information such as a service name, a service type, a performer name, and the like by a remote controller to screen a desired program in the on-demand program database via a search engine on the set-top box side refers to screening programs in the on-demand program database by inputing a service name, a service type, or a performer name on the on-demand program searching interface using a remote controller. The on-demand program searching interface is shown in FIG. 14. The on-demand program searching interface contains three optional searching key words, which are service name, service type, and performer name, respectively. The service type can be searched in the on-demand program database by inputing service type keywords using a remote controller, or selected by switching the right or left key of the remote controller. The service type includes film, drama, television play, news, performance, games, sports, children, youth, music, dance, culture, art (excluding music and dance), science, education, society, politics, economy, entertainment, etc. After the search engine screens a desired program in the on-demand program database, the corresponding information would be displayed on the on-demand interface, including the VOD service name and its additional information. There would also be a corresponding prompt if the search engine cannot find a desired program in the on-demand program database.
   In the implementation, the VOD service list and its additional information displayed on the on-demand interface refer to the VOD service name and information related to the currently selected VOD service. The information related to the currently selected VOD service includes a picture or an audio/video segment, a service name or a service segment number, a duration or a duration of segment, a performer name, and price information. Furthermore, the picture or audio/video segment is used to provide a picture introduction or an attractive audio/video segment. If the information related to the currently selected VOD service includes both of a picture or an audio/video segment, the audio/video segment would be preferentially displayed on the on-demand program interface. The service name or the service segment number is related to the text description of a service or a service segment. When the remote controller selects the service name or the service segment number and the enter key is pressed, the text brief introduction of the VOD service or the VOD service segment will be viewed. The duration or the duration of segment depends on whether the currently selected VOD service is segmented. A performer name is associated with information of a performer brief introduction. When the remote controller selects the performer name and the enter key is pressed, the information of a performer brief introduction will be shown. There could be several performer names. The price information is used to provide information associated with the price of the current VOD service. A service name in the VOD service list is associated with a VOD server IP address and a backup VOD server IP address, which provides related information for the on-demand program.
(4) The on-demand program is confirmed and an on-demand request is transmitted. The user confirms the on-demand program, and the set-top box transmits an on-demand request to the VOD server.
   After the user selects a desired program on the on-demand interface, the set-top box transmits an on-demand request to a VOD server. The user selected program is associated with a VOD server IP address and a backup VOD server IP address. The VOD server refers to the unique VOD server indentified by the VOD server IP address associated with the user selected program. When the VOD server is unavailable, the backup VOD server IP address is enabled. The on-demand request includes the user selecting VOD service and related information of the user set-top box. The related information of the user set-top box refers to such as the smart card number, the serial number, and the like information.
(5) The front-end VOD server distributes on-demand parameters and broadcasts an on-demand program. Responsive to the on-demand request, the VOD server distributes the VOD service's frequency point and other relevant parameter information of the VOD service to the set-top box and broadcasts the on-demand program requested by the user.
   After receiving the on-demand request sent by the user, the VOD server carries out the authentication according to the obtained information related to the user set-top box. If the authentication is successful, the VOD server distributes a VOD service frequency point and other relevant parameter information to the set-top box, broadcasts the on-demand program requested by the user, and send billing related information to a front-end user management system.
(6) The set-top box obtains the on-demand parameters and plays the program. The set-top box obtains a frequency point, a service identifier, a PID, and the like information according to the on-demand parameters distributed by the VOD server, and plays the program according to the information described above.

Fig. 15 shows a flow chart of a method of playing a digital television program provided in an embodiment of the present invention.

In step S1501, a server and at least one digital television receiving terminal are provided.

In step S1502, a server presets a video on demand (VOD) protocol specification and transmits, according to the VOD protocol specification, a VOD service list and additional information of the VOD service list to the digital television receiving terminal in a broadcasting mode.

In step S1503, the digital television receiving terminal presets the VOD protocol specification and stores, according to the VOD protocol specification, the VOD service list and the additional information of the VOD service list transmitted by the VOD server into an on-demand program database.

In step S1504, the digital television receiving terminal matches relative programs in the on-demand program database according to a matching identifier input by a user, displays the programs to the user.

In step S1505, the digital television receiving terminal receives a program on-demand request of the user, and obtains a television program from the server according to the program on-demand request to play the television program to the user.

Wherein, the digital television receiving terminal matching the relative programs in the on-demand program database according to the matching identifier input by the user and displaying the programs to the user comprises:
displaying the VOD service list and the additional information of the VOD service list to the user, wherein the user chooses a program according to the VOD service list and the additional information of the VOD service list; and
receiving directly the matching identifier input by the user to match the relative programs in the on-demand program database.

Wherein, in the VOD protocol specification, a data structure in a data stream transmitted between the server and the digital television receiving terminal comprises a linkage descriptor, a VOD service list section, a VOD service information section, a price reference descriptor, a picture data section, and audio/video segment insertion information.

Wherein, the digital television receiving terminal obtaining the VOD service list and the additional information of the VOD service list from the data stream comprises:
parsing and receiving the VOD service list section, and obtaining the VOD service list and address information of the server;
parsing and receiving the VOD service information section, and obtaining related information of a VOD service;
parsing and receiving the price reference descriptor, and obtaining information related to a service pay mode and a service price;
parsing and receiving the picture data section, and obtaining corresponding picture data; and
parsing and receiving the audio/video segment insertion information, and storing an audio/video segment service associated with the audio/video segment insertion information in the VOD service information section.

The method further comprises the following steps:
the digital television receiving terminal obtains a VOD service list version number from the data stream, compares the obtained VOD service list version number with a VOD service list version number stored in the on-demand program database, and updates the VOD service list if the two VOD service list version numbers are inconsistent.

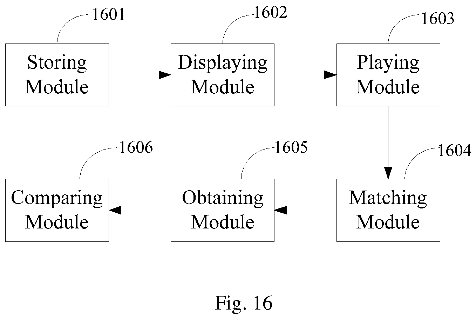

Fig. 16 shows a structure of a digital television receiving terminal provided in an embodiment of the present invention:
a storing module 1601 for presetting video on demand (VOD) protocol specification and store, according to the VOD protocol specification, a VOD service list and additional information of the VOD service list transmitted by a VOD server to an on-demand program database;
a displaying module 1602 for matching relative programs in the on-demand program database according to a matching identifier input by a user and displaying the programs to the user;
a playing module 1603 for receiving a program on-demand request of the user and obtaining a television program from the server according to the program on-demand request to play the television program to the user.

The digital television receiving terminal further comprises:
a matching module 1604 for receiving the matching identifier input by the user to match the relative programs in the on-demand program database.

Wherein, in the VOD protocol specification, the data structure in the data stream transmitted between the server and the digital television receiving terminal comprises a linkage descriptor, a VOD service list section, a VOD service information section, a price reference descriptor, a picture data section, and audio/video segment insertion information.

Wherein, the digital television receiving terminal further comprises:
an obtaining module 1605 for parsing and receiving the VOD service list section, obtaining the VOD service list with address information of the server; parsing and receiving the VOD service information section, obtaining related information of a VOD service; parsing and receiving the price reference descriptor, obtaining information related a service pay mode and a service price; parsing and receiving the picture data section, obtaining corresponding picture data; parsing and receiving the audio/video segment insertion information, and storing an audio/video segment service associated with the audio/video segment insertion information in the VOD service information section.

The digital television receiving terminal further comprises:
a comparing module 1606 for obtaining a VOD service list version number from the data stream, comparing the VOD service list version number with a VOD service list version number stored in the on-demand program database, and controlling the obtainning module to update the VOD service list if the two VOD service list version numbers are inconsistent.

The technical solutions of the present invention would bring the following advantageous effects.

Based on the above described systems and methods for playing a digital television program and the digital television receiving terminal, compared with conventional implementation methods and systems for video on demand, there are at least the following advantageous effects.
(1) The front-end initiatively distributes the program list and its addtional information by broadcasting, and stores the information into the on-demand program database on the set-top box side. The user can directly see the on-demand program list and its additonal information on the on-demand program interface on the set-top box side. Thus, situation that a conventional bi-direction set-top box has to transmit a request of acquiring on-demand program list when obtaining the on-demand program list is changed, and the front-end server sends the on-demand program list and its additional information to the set-top box by IP. The tranditional way thereof may cause network congestion when the concurrency is large enough. The solution of present invention resolves the problem of the network congestion.
(2) The situation that a conventional VOD server passively issues the on-demand program list is changed, and the server is changed from being passive to being initiative.
(3) An on-demand program database is created in the set-top box. Compared with the conventional VOD, it could be more convenient to obtain the program list and its additional information, thus enhancing the user experience.
(4) Compared with the conventional VOD, it is provided an audio/video segment service associated with the VOD service. The audio/video segment service is used to provide an excellent segment in the VOD service and make the service more attractive to users.
(5) The conventional VOD needs to integrate a browser, the browser integration brings complexity to the software development, and different browsers are hard to be compatible with different VOD, which brings big risk to the integration. While, the solution of present invention does not need to integrate a browser, and what it needs is just to parse the transport stream (TS) to obtain the VOD list and its additional information according to the VOD protocol specification defined by present invention, whereby the video on demand can be accomplished. The solution of present invention also makes software integration easier and reduces the risk brought by the integration.
(6) The technical solution provided by the present invention can be used universally, and applied to any transmission system using channel coding techniques, including cable, terrestrial, and satellite.
(7) It is possible to provide a massive number of VOD services, making searching and selection easy to users and bringing users the experience of searching programs on the Internet.

## Claims

1. A system for playing a digital television program, comprising a server (11) and at least one digital television receiving terminal (12), wherein:
the server (11) presets a video on demand (VOD) protocol specification and transmits, according to the VOD protocol specification, a VOD service list and additional information of the VOD service list to the digital television receiving terminal (12) in a broadcasting mode, wherein the server transmits the VOD service list and addition information of the VOD service list initiatively, i.e. without requiring the digital television receiving terminal to transmit a request for the VOD service list and additional information of the VOD service list;
the digital television receiving terminal (12) presets the VOD protocol specification and stores, according to the VOD protocol specification, the VOD service list and the additional information of the VOD service list transmitted by the VOD server (12) into an on-demand program database (S903); and
the digital television receiving terminal (12) further matches relative programs in the on-demand program database (S903) according to a matching identifier input by a user, displays the programs to the user, receives a program on-demand request of the user, and obtains a television program from the server (11) according to the program on-demand request to play the television program to the user,
wherein, in the VOD protocol specification, a data structure in a data stream transmitted between the server and the digital television receiving terminal comprises:
a linkage descriptor,
a VOD service list section,
a VOD service information section,
a price reference descriptor,
a picture data section, and
audio/video segment insertion information.

2. The system for playing the digital television program of claim 1, wherein the digital television receiving terminal (12) matching the relative programs in the on-demand program database (S903) according to the matching identifier input by the user and displaying the programs to the user comprises: displaying the VOD service list and the additional information of the VOD service list to the user, wherein the user chooses a program according to the VOD service list and the additional information of the VOD service list; and
directly receiving the matching identifier input by the user to match the relative programs in the on-demand program database (S903).

3. The system for playing the digital television program of claim 1, wherein the digital television receiving terminal (12) obtaining the VOD service list and additional information of the VOD service list from the data stream comprises:
parsing and receiving the VOD service list section, and obtaining the VOD service list and address information of the server (11);
parsing and receiving the VOD service information section, and obtaining related information of a VOD service;
parsing and receiving the price reference descriptor, and obtaining information related to a service pay mode and a service price;
parsing and receiving the picture data section, and obtaining corresponding picture data; and
parsing and receiving the audio/video segment insertion information, and storing an audio/video segment service associated with the audio/video segment insertion information in the VOD service information section.

4. The system for playing the digital television program of claim 1, wherein the digital television receiving terminal (12) is further used for obtaining a VOD service list version number from the data stream, comparing the obtained VOD service list version number with a VOD service list version number stored in the on-demand program database (S903), and updating the VOD service list if the two VOD service list version numbers are inconsistent.

5. A method for playing a digital television program, comprising:
providing a server (11) and at least one digital television receiving terminal (12);
the server (11) presetting a video on demand (VOD) protocol specification, and transmiting, according to the VOD protocol specification, a VOD service list and additional information of the VOD service list to the digital television receiving terminal (12) in a broadcasting mode, wherein the server transmits the VOD service list and addition information of the VOD service list initiatively, i.e. without requiring the digital television receiving terminal to transmit a request for the VOD service list and additional information of the VOD service list;
the digital television receiving terminal (12) presetting the VOD protocol specification, and storing, according to the VOD protocol specification, the VOD service list and the additional information of the VOD service list transmitted by the VOD server to an on-demand program database (S903);
the digital television receiving terminal (12) matching relative programs in the on-demand program database (S903) according to a matching identifier input by a user, and displaying the programs to the user; and
the digital television receiving terminal (12) receiving a program on-demand request of the user, and obtaining a television program from the server (11) according to the program on-demand request to play the television program to the user,
wherein, in the VOD protocol specification, a data structure in a data stream transmitted between the server and the digital television receiving terminal comprises:
a linkage descriptor,
a VOD service list section,
a VOD service information section,
a price reference descriptor,
a picture data section, and
audio/video segment insertion information.

6. The method for playing the digital television program of claim 5, wherein the digital television receiving terminal (12) matching the relative programs in the on-demand program database (S903) according to the matching identifier input by the user and displaying the programs to the user comprises:
displaying the VOD service list and the additional information of the VOD service list to the user, wherein the user chooses a program according to the VOD service list and the additional information of the VOD service list; and
receiving directly the matching identifier input by the user to match the relative programs in the on-demand program database (S903).

7. The method for playing the digital television program of claim 5, wherein the digital television receiving terminal (12) obtaining the VOD service list and the additional information of the VOD service list from the data stream comprises:
parsing and receiving the VOD service list section, and obtaining the VOD service list and address information of the server (11);
parsing and receiving the VOD service information section, and obtaining related information of a VOD service;
parsing and receiving the price reference descriptor, and obtaining information related to a service pay mode and a service price;
parsing and receiving the picture data section, and obtaining corresponding picture data; and
parsing and receiving the audio/video segment insertion information, and storing an audio/video segment service associated with the audio/video segment insertion information in the VOD service information section.

8. The method for playing the digital television program of claim 5, further comprising:
the digital television receiving terminal (12) obtaining a VOD service list version number from the data stream; comparing the obtained VOD service list version number with a VOD service list version number stored in the on-demand program database; and updating the VOD service list if the two VOD service list version numbers are inconsistent.

## Patentansprüche

1. System zur Wiedergabe eines digitalen Fernsehprogramms, umfassend einen Server (11) und zumindest ein digitales Fernsehempfangsendgerät (12), wobei:
der Server (11) eine Video-auf-Anfrage-(VOD-)Protokollspezifizierung voreinstellt und gemäß der VOD-Protokollspezifizierung eine VOD-Dienst-Liste sowie zusätzliche Informationen der VOD-Dienst-Liste an das digitale Fernsehempfangsendgerät (12) in einem Broadcastmodus überträgt, wobei der Server die VOD-Dienst-Liste sowie die zusätzlichen Informationen der VOD-Dienst-Liste initiativ überträgt, d. h. ohne dass das digitale Fernsehempfangsendgerät eine Anforderung in Bezug auf die VOD-Dienst-Liste und zusätzliche Informationen der VOD-Dienst-Liste senden muss; wobei
das digitale Fernsehempfangsgerät (12) die VOD-Protokollspezifizierung voreinstellt und gemäß der VOD-Protokollspezifizierung die vom VOD-Server (12) übertragene(n) VOD-Dienst-Liste sowie die zusätzlichen Informationen der VOD-Dienst-Liste in einer Auf-Anfrage-Programmdatenbank (S903) speichert; und wobei
das digitale Fernsehempfangsendgerät (12) ferner entsprechende Programme in der Auf-Anfrage-Programmdatenbank (S903) gemäß einem von einem Benutzer eingegebenen Abgleich-Indikator abgleicht, dem Benutzer die Programme anzeigt, eine Programm-auf-Anfrage-Anforderung des Benutzers empfängt und ein Fernsehprogramm vom Server (11) gemäß der Programm-auf-Anfrage-Anforderung erhält, um das Fernsehprogramm für den Benutzer wiederzugeben, wobei
in der VOD-Protokollspezifizierung eine Datenstruktur in einem Datenstrom, der zwischen dem Server und dem digitalen Fernsehempfangsendgerät übertragen wird, Folgendes umfasst:
einen Verbindungsdeskriptor,
einen VOD-Dienst-Listenabschnitt
einen VOD-Dienst-Informationsabschnitt,
einen Preisreferenzdeskriptor,
einen Bilddatenabschnitt und
Audio-/Videosegment-Eingabeinformationen.

2. System zur Wiedergabe des digitalen Fernsehprogramms nach Anspruch 1, wobei das Abgleichen der entsprechenden Programme in der Auf-Anfrage-Programm-Datenbank (S903) gemäß dem vom Benutzer eingegebenen Abgleich-Indikator und das Anzeigen der Programme für den Benutzer durch das digitale Fernsehempfangsendgerät (12) Folgendes umfasst:
Anzeigen der VOD-Dienst-Liste und der zusätzlichen Informationen der VOD-Dienst-Liste für den Benutzer, wobei der Benutzer ein Programm gemäß der VOD-Dienst-Liste und den zusätzlichen Informationen der VOD-Dienst-Liste auswählt; und
direktes Empfangen des vom Benutzer eingegebenen Abgleich-Indikators, um die entsprechenden Programme in der Auf-Anfrage-Programm-Datenbank (S903) abzugleichen.

3. System zur Wiedergabe der digitalen Fernsehprogramms nach Anspruch 1,
wobei das Erhalten der VOD-Dienst-Liste und der zusätzlichen Informationen der VOD-Dienst-Liste aus dem Datenstrom durch das digitale Fernsehempfangsendgerät (12) Folgendes umfasst:
Parsen und Empfangen des VOD-Dienst-Listenabschnitts und Erhalten der VOD-Dienst-Liste und der Adressinformationen des Servers (11);
Parsen und Empfangen des VOD-Dienst-Informationsabschnitts und Erhalten von darauf bezogenen Informationen eines VOD-Diensts;
Parsen und Empfangen des Preisreferenzdeskriptors und Erhalten von Informationen in Bezug auf einen Dienstbezahlungsmodus und einen Dienstpreis;
Parsen und Empfangen des Bilddatenabschnitts und Erhalten von entsprechenden Bilddaten; und
Parsen und Empfangen der Audio-/Video-Segmenteingabeinformationen und Speichern eines Audio-/Video-Segmentdiensts, der den Audio-/Video-Segmenteingabeinformationen im VOD-Dienst-Informationsabschnitt zugeordnet ist.

4. System zur Wiedergabe des digitalen Fernsehprogramms nach Anspruch 1, wobei das digitale Fernsehempfangsendgerät (12) ferner verwendet wird, um eine VOD-Dienst-Listenversionszahl aus dem Datenstrom zu erhalten, die erhaltene VOD-Dienstlistenversionszahl mit einer in der Auf-Anfrage-Programm-Datenbank (S903) gespeicherten VOD-Dienst-Listenversionszahl zu vergleichen und die VOD-Dienst-Liste zu aktualisieren, wenn die beiden VOD-Dienst-Listenversionszahl nicht übereinstimmen.

5. Verfahren zur Wiedergabe eines digitalen Fernsehprogramms, Folgendes umfassend:
Bereitstellen eines Servers (11) und zumindest eines digitalen Fernsehempfangsendgeräts (12); wobei
der Server (11) eine Video-auf-Anfrage-(VOD-)Protokollspezifizierung voreinstellt und gemäß der VOD-Protokollspezifizierung eine VOD-Dienst-Liste sowie zusätzliche Informationen der VOD-Dienst-Liste an das digitale Fernsehempfangsendgerät (12) in einem Broadcastmodus überträgt, wobei der Server die VOD-Dienst-Liste sowie die zusätzlichen Informationen der VOD-Dienst-Liste initiativ überträgt, d. h. ohne dass das digitale Fernsehempfangsendgerät eine Anforderung in Bezug auf die VOD-Dienst-Liste und zusätzliche Informationen der VOD-Dienst-Liste senden muss; wobei
das digitale Fernsehempfangsgerät (12) die VOD-Protokollspezifizierung voreinstellt und gemäß der VOD-Protokollspezifizierung die vom VOD-Server (12) übertragene(n) VOD-Dienst-Liste sowie die zusätzlichen Informationen der VOD-Dienst-Liste in einer Auf-Anfrage-Programmdatenbank (S903) speichert; und wobei
das digitale Fernsehempfangsendgerät (12) entsprechende Programme in der Auf-Anfrage-Programmdatenbank (S903) gemäß einem von einem Benutzer eingegebenen Abgleich-Indikator abgleicht und dem Benutzer die Programme anzeigt, und wobei
das digitale Fernsehempfangsendgerät (12) eine Programm-auf-Anfrage-Anforderung des Benutzers empfängt und ein Fernsehprogramm vom Server (11) gemäß der Programm-auf-Anfrage-Anforderung erhält, um das Fernsehprogramm für den Benutzer wiederzugeben, wobei
in der VOD-Protokollspezifizierung eine Datenstruktur in einem Datenstrom, der zwischen dem Server und dem digitalen Fernsehempfangsendgerät übertragen wird, Folgendes umfasst:
einen Verbindungsdeskriptor,
einen VOD-Dienst-Listenabschnitt
einen VOD-Dienst-informationsabschnitt,
einen Preisreferenzdeskriptor,
einen Bilddatenabschnitt und
Audio-/Videosegment-Eingabeinformationen.

6. Verfahren zur Wiedergabe des digitalen Fernsehprogramms nach Anspruch 5, wobei das Abgleichen der entsprechenden Programme in der Auf-Anfrage-Programm-Datenbank (S903) gemäß dem vom Benutzer eingegebenen Abgleich-Indikator und das Anzeigen der Programme für den Benutzer durch das digitale Fernsehempfangsendgerät (12) Folgendes umfasst:
Anzeigen der VOD-Dienst-Liste und der zusätzlichen Informationen der VOD-Dienst-Liste für den Benutzer, wobei der Benutzer ein Programm gemäß der VOD-Dienst-Liste und den zusätzlichen Informationen der VOD-Dienst-Liste auswählt; und
direktes Empfangen des vom Benutzer eingegebenen Abgleich-Indikators, um die entsprechenden Programme in der Auf-Anfrage-Programm-Datenbank (S903) abzugleichen.

7. Verfahren zur Wiedergabe des digitalen Fernsehprogramms nach Anspruch 5, wobei das Erhalten der VOD-Dienst-Liste und der zusätzlichen Informationen der VOD-Dienst-Liste aus dem Datenstrom durch das digitale Fernsehempfangsendgerät (12) Folgendes umfasst:
Parsen und Empfangen des VOD-Dienst-Listenabschnitts und Erhalten der VOD-Dienst-Liste und der Adressinformationen des Servers (11);
Parsen und Empfangen des VOD-Dienst-Informationsabschnitts und Erhalten von darauf bezogenen Informationen eines VOD-Diensts;
Parsen und Empfangen des Preisreferenzdeskriptors und Erhalten von Informationen in Bezug auf einen Dienstbezahlungsmodus und einen Dienstpreis;
Parsen und Empfangen des Bilddatenabschnitts und Erhalten von entsprechenden Bilddaten; und
Parsen und Empfangen der Audio-/Video-Segmenteingabeinformationen und Speichern eines Audio-/Video-Segmentdiensts, der den Audio-/Video-Segmenteingabeinformationen im VOD-Dienst-Informationsabschnitt zugeordnet ist.

8. Verfahren zur Wiedergabe des digitalen Fernsehprogramms nach Anspruch 5, ferner Folgendes umfassend:
Erhalten einer VOD-Dienst-Listenversionszahl aus dem Datenstrom; Vergleichen der erhaltenen VOD-Dienstlistenversionszahl mit einer in der Auf-Anfrage-Programm-Datenbank gespeicherten VOD-Dienst-Listenversionszahl; und Aktualisieren der VOD-Dienst-Liste, wenn die beiden VOD-Dienst-Listenversionszahl nicht übereinstimmen, durch das digitale Fernsehempfangsendgerät (12).

## Revendications

1. Système de lecture d'un programme de télévision numérique, comprenant un serveur (11) et au moins un terminal de réception de télévision numérique (12), dans lequel :
le serveur (11) préétablit une spécification de protocole de vidéo à la demande (VOD) et transmet, conformément à la spécification de protocole VOD, une liste de services VOD et des informations supplémentaires de la liste de services VOD au terminal de réception de télévision numérique (12) dans un mode de diffusion , dans lequel le serveur transmet la liste de services VOD et les informations supplémentaires de la liste de services VOD de manière initiale, c'est-à-dire sans exiger du terminal de réception de télévision numérique de transmettre une demande pour la liste de services VOD et les informations supplémentaires de la liste de services VOD ;
le terminal de réception de télévision numérique (12) préétablit la spécification de protocole VOD et stocke, conformément à la spécification de protocole VOD, la liste de services VOD et les informations supplémentaires de la liste de services VOD transmises par le serveur VOD (12) dans une base de données de programmes à la demande (S903) ; et
le terminal de réception de télévision numérique (12) mis en correspondance en outre des programmes parents dans la base de données de programmes à la demande (S903) en fonction d'un identifiant de correspondance entré par un utilisateur, affiche les programmes à l'utilisateur, reçoit une demande de programme à la demande de l'utilisateur, et obtient un programme de télévision à partir du serveur (11) conformément à la demande de programme à la demande pour lire le programme de télévision à l'utilisateur,
dans lequel, dans la spécification de protocole VOD, une structure de données dans un flux de données transmis entre le serveur et le terminal de réception de télévision numérique comprend :
un descripteur de liaison,
une section de liste de services VOD,
une section d'informations de service VOD,
un descripteur de référence de prix,
une section de données d'image, et
des informations d'insertion de segment audio/vidéo.

2. Système pour lire le programme de télévision numérique selon la revendication 1, dans lequel le terminal de réception de télévision numérique (12) met en correspondance les programmes parents dans la base de données de programmes à la demande (S903) en fonction de l'identifiant de mise en correspondance entré par l'utilisateur et l'étape consistant à afficher les programmes à l'utilisateur comprend : l'affichage de la liste de services VOD et des informations supplémentaires de la liste de services VOD à l'utilisateur, dans lequel l'utilisateur choisit un programme en fonction de la liste de services VOD et des informations supplémentaires de la liste de services VOD ; et
reçoit directement l'identifiant de mis en correspondance entré par l'utilisateur pour mettre en correspondance les programmes parents dans la base de données de programmes à la demande (S903).

3. Système de lecture du programme de télévision numérique selon la revendication 1, dans lequel le terminal de réception de télévision numérique (12) obtenant la liste de services VOD et des informations supplémentaires de la liste de services VOD à partir du flux de données comprend les étapes consistant à :
analyser et recevoir la section de liste de services VOD et obtenir la liste de services VOD et des informations d'adresse du serveur (11) ;
analyser et recevoir la section d'informations de service VOD, et obtenir des informations relatives d'un service VOD ;
analyser et recevoir le descripteur de référence de prix, et obtenir des informations relatives à un mode de paiement de service et à un prix de service ;
analyser et recevoir la section de données d'image, et obtenir des données d'image correspondantes ; et
analyser et recevoir les informations d'insertion de segment audio/vidéo et stocker un service de segment audio/vidéo associé aux informations d'insertion de segment audio/vidéo dans la section d'informations de service VOD.

4. Système de lecture du programme de télévision numérique selon la revendication 1, dans lequel le terminal de réception de télévision numérique (12) est en outre utilisé pour obtenir un numéro de version de liste de services VOD à partir du flux de données, comparer le numéro de version de liste de services VOD obtenu à un numéro de version de liste de services VOD stocké dans la base de données de programmes à la demande (S903), et mettre à jour la liste de services VOD si les deux numéros de version de liste de services VOD ne sont pas conformes.

5. Procédé pour lire un programme de télévision numérique, comprenant les étapes consistant à :
fournir un serveur (11) et au moins un terminal de réception de télévision numérique (12) ;
le serveur (11) préétablissant une spécification de protocole de vidéo à la demande (VOD) et transmettant, conformément à la spécification de protocole VOD, une liste de services VOD et des informations supplémentaires de la liste de services VOD au terminal de réception de télévision numérique (12) dans un mode de diffusion, dans lequel le serveur transmet la liste de services VOD et des informations supplémentaires de la liste de services VOD de manière initiale, c'est-à-dire sans exiger du terminal de télévision numérique la transmission d'une demande pour la liste de services VOD et d'informations supplémentaires de la liste de services VOD ;
le terminal de réception de télévision numérique (12) préétablissant la spécification de protocole VOD et stockant, conformément à la spécification de protocole VOD, la liste de services VOD et les informations supplémentaires de la liste de services VOD transmises par le serveur VOD dans une base de données de programmes à la demande (S903) ;
le terminal de réception de télévision numérique (12) mettant en correspondance des programmes parents dans la base de données de programmes à la demande (S903) en fonction d'un identifiant de mise en correspondance entré par un utilisateur, et affichant les programmes à l'utilisateur ; et
le terminal de réception de télévision numérique (12) recevant une demande de programme à la demande de l'utilisateur, et obtenant un programme de télévision à partir du serveur (11) conformément à la demande de programme à la demande pour lire le programme de télévision à l'utilisateur,
dans lequel, dans la spécification de protocole VOD, une structure de données dans un flux de données transmis entre le serveur et le terminal de réception de télévision numérique comprend :
un descripteur de liaison,
une section de liste de services VOD,
une section d'informations de services VOD,
un descripteur de référence de prix,
une section de données d'image, et
des informations d'insertion de segment audio/vidéo.

6. Procédé pour lire le programme de télévision numérique de la revendication 5, dans lequel le terminal de réception de télévision numérique (12) mettant en correspondance les programmes relatifs dans la base de données de programmes à la demande (S903) en fonction de l'identifiant de mise en correspondance entré par l'utilisateur et affiche les programmes sur l'utilisateur comprend les étapes consistant à :
afficher la liste de services VOD et les informations supplémentaires de la liste de services VOD à l'utilisateur, dans lequel l'utilisateur choisit un programme en fonction de la liste de services VOD et des informations supplémentaires de la liste de services VOD ; et
recevoir directement l'identifiant de mise en correspondance entré par l'utilisateur pour mettre en correspondance les programmes parents dans la base de données de programmes à la demande (S903).

7. Procédé de lecture du programme de télévision numérique selon la revendication 5, dans lequel le terminal de réception de télévision numérique (12) obtenant la liste de services VOD et les informations supplémentaires de la liste de services VOD à partir du flux de données comprend les étapes consistant à :
analyser et recevoir la section de liste de services VOD, et obtenir la liste de services VOD et les informations d'adresse du serveur (11) ;
analyser et recevoir la section d'informations de service VOD, et obtenir des informations relatives d'un service VOD ;
analyser et recevoir le descripteur de référence de prix et obtenir des informations relatives à un mode de paiement de service et à un prix de service ;
analyser et recevoir la section de données d'image, et obtenir les données d'image correspondantes ; et
analyser et recevoir les informations d'insertion de segment audio/vidéo et stocker un service de segment audio/vidéo associé aux informations d'insertion de segment audio/vidéo dans la section d'informations de service VOD.

8. Procédé pour lire le programme de télévision numérique selon la revendication 5, comprenant en outre :
le terminal de réception de télévision numérique (12) obtenant un numéro de version de liste de services VOD à partir du flux de données ; comparant le numéro de version de liste de services VOD obtenu avec un numéro de version de liste de services VOD stocké dans la base de données de programmes à la demande ; et mettre à jour la liste de services VOD si les deux numéros de version de la liste de services VOD sont non conformes.
